(19) **Europäisches Patentamt / European Patent Office / Office européen des brevets**

(11) **EP 4 604 436 A1**

(12) **EUROPEAN PATENT APPLICATION**
published in accordance with Art. 153(4) EPC

(43) Date of publication:
**20.08.2025 Bulletin 2025/34**

(21) Application number: **23889074.3**

(22) Date of filing: **06.11.2023**

(51) International Patent Classification (IPC):
*H04L 5/00* (2006.01)   *H04L 5/14* (2006.01)
*H04W 72/23* (2023.01)

(52) Cooperative Patent Classification (CPC):
**H04L 5/00; H04L 5/14; H04W 72/23**

(86) International application number:
**PCT/KR2023/017634**

(87) International publication number:
**WO 2024/101813 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2022  KR 20220150897**

(71) Applicant: **Samsung Electronics Co., Ltd.
Suwon-si, Gyeonggi-do 16677 (KR)**

(72) Inventors:
• **CHOI, Kyungjun
Suwon-si, Gyeonggi-do 16677 (KR)**
• **SHIM, Jaeyeon
Suwon-si, Gyeonggi-do 16677 (KR)**
• **JI, Hyoungju
Suwon-si, Gyeonggi-do 16677 (KR)**
• **CHOE, Hyemin
Suwon-si, Gyeonggi-do 16677 (KR)**

(74) Representative: **Nederlandsch Octrooibureau
P.O. Box 29720
2502 LS The Hague (NL)**

(54) **METHOD AND DEVICE FOR REFERENCE SIGNAL TRANSMISSION/RECEPTION AND RATE MATCHING FOR FULL-DUPLEX COMMUNICATION IN WIRELESS COMMUNICATION SYSTEM**

(57)   The present disclosure relates to a 5G or 6G communication system for supporting higher data transmission rates. The present disclosure provides a method for downlink control channel configuration and reception in a wireless communication system.

FIG. 16

**Description**

**[Technical Field]**

The disclosure relates to operations of a terminal and a base station in a wireless communication system. Specifically, the disclosure relates to a method and a device for transmitting or receiving a reference signal by a terminal and performing rate matching according thereto.

**[Background Art]**

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, various services can be provided, and accordingly there is a need for ways to smoothly provide these services.

**[Disclosure of Invention]**

**[Technical Problem]**

The disclosure is to provide a device and a method capable of effectively providing services in a mobile communication system.

The technical subjects pursued in embodiments of the disclosure may not be limited to the above-mentioned technical subjects, and other technical subjects which are not mentioned may be clearly understood from the following descriptions by those skilled in the art to which the disclosure pertains.

**[Solution to Problem]**

The disclosure for solving the above problem relates to a method performed by a terminal in a wireless communication system supporting subband non-overlapping full duplex (SBFD) includes: obtaining at least one piece of uplink subband (UL subband) configuration information including time and frequency resource configuration information for configuring a part of a resource for downlink reception as a resource for uplink transmission, and first information indicating an uplink subband to be activated among at least one uplink subband; receiving control information on downlink data reception in the activated uplink subband; and determining whether to receive downlink data in the activated uplink subband, based on one of the at least one piece of uplink subband configuration information, the first information, or the control information.

The disclosure for solving the above problem relates to a method performed by a base station in a wireless communication system supporting subband non-overlapping full duplex (SBFD) includes: transmitting, to a terminal, at least one piece of uplink subband (UL subband) configuration information including time and frequency resource configuration information for configuring a part of a resource for downlink reception as a resource for uplink transmission, and first information indicating an uplink subband to be activated among at least one uplink subband; transmitting, to the terminal, control information on downlink data reception in the activated uplink subband; and transmitting downlink data in the activated uplink subband, based on one of the at least one piece of uplink subband configuration information, the first information, or the control information.

The disclosure for solving the above problem relates to a terminal in a wireless communication system supporting subband non-overlapping full duplex (SBFD) includes: a transceiver configured to transmit or receive a signal; and a controller, wherein the controller is configured to: obtain at least one piece of uplink subband (UL subband) configuration information including time and frequency resource configuration information for configuring a part of a resource for downlink reception as a resource for uplink transmission, and first information indicating an uplink subband to be activated among at least one uplink subband; receive control information on downlink data reception in the activated uplink subband; and determine whether to receive downlink data in the activated uplink subband, based on one of the at least one piece of uplink subband configuration information, the first information, or the control information.

The disclosure for solving the above problem relates to a base station in a wireless communication system supporting subband non-overlapping full duplex (SBFD) includes: a transceiver configured to transmit or receive a signal; and a controller, wherein the controller is configured to: transmit, to a terminal, at least one piece of uplink subband (UL subband) configuration information including time and frequency resource configuration information for configuring a part of a resource for downlink reception as a resource for uplink transmission, and first information indicating an uplink subband to be activated among at least one uplink subband; transmit, to the terminal, control information on downlink data reception in the activated uplink subband; and transmit downlink data in the activated uplink subband, based on one of the at least one piece of uplink subband configuration information, the first information, or the control information.

The disclosure proposes a method for reference signal transmission/reception and rate matching in subband non-overlapping full duplex (SBFD).

An embodiment of the disclosure proposes a method for not transmitting a PDSCH in overlapping RBs when a DMRS symbol of a scheduled PDSCH overlaps a UL subband.

According to an embodiment of the disclosure, depending on whether a DMRS can be transmitted for each RE, one RB, or multiple RBs, a terminal may determine whether to receive the RB in all symbols of a scheduled PDSCH.

According to an embodiment of the disclosure, when an additional DMRS is configured for a PDSCH, the terminal may identify rate matching based on a first DMRS (front-loaded DMRS). For example, the terminal may identify rate matching depending on whether either the first DMRS (front-loaded DMRS) or the additional DMRS overlaps a UL subband. For another example, the terminal may identify rate matching depending on whether both the first DMRS (front-loaded DMRS) and the additional DMRS overlap the UL subband.

**[Advantageous Effects of Invention]**

The disclosure provides a device and a method capable of effectively providing services in a mobile communication system.

Advantageous effects obtainable from the disclosure may not be limited to the above-mentioned effects, and other effects which are not mentioned may be clearly understood from the following descriptions by those skilled in the art to which the disclosure pertains.

**[Brief Description of Drawings]**

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of a bandwidth part configuration in a wireless communication system according to an embodiment of the disclosure.

FIG. 4 illustrates an example of a control resource set configuration of a downlink control channel in a wireless communication system according to an embodiment of the disclosure.

FIG. 5 illustrates a structure of a downlink control channel in a wireless communication system according to an embodiment of the disclosure.

FIG. 6 illustrates a method in which a base station and a UE transmit/receive data in consideration of a downlink data channel and a rate matching resource in a wireless communication system according to an embodiment of the disclosure.

FIG. 7 illustrates an example of frequency domain resource allocation with regard to a physical downlink shared channel (PDSCH) in a wireless communication system according to an embodiment of the disclosure.

FIG. 8 illustrates an example of time domain resource allocation with regard to a PDSCH in a wireless communication system according to an embodiment of the disclosure.

FIG. 9 illustrates an example of time domain resource allocation according to a subcarrier spacing with regard to a data channel and a control channel in a wireless communication system according to an embodiment of the disclosure.

FIG. 10 illustrates radio protocol structures of a base station and a UE in single cell, carrier aggregation, and dual connectivity situations in a wireless communication system according to an embodiment of the disclosure.

FIG. 11 is a diagram illustrating a time division duplexing (TDD) configuration and a subband non-overlapping full duplex (SBFD) configuration according to an embodiment of the disclosure.

FIG. 12 is a diagram illustrating a UL subband configuration and physical downlink shared channel (PDSCH) scheduling within a slot according to an embodiment of the disclosure.

FIG. 13 is a diagram illustrating a DL subband configuration and physical uplink shared channel (PUSCH) scheduling within a slot according to an embodiment of the disclosure.

FIG. 14 is a diagram illustrating a situation in which a demodulation reference signal (DMRS) symbol of a physical downlink shared channel (PDSCH) overlaps a UL subband according to an embodiment of the disclosure.

FIG. 15 is a diagram illustrating physical downlink shared channel (PDSCH) reception in the unit of a resource block (RB) according to a third method of embodiment 2 proposed in the disclosure.

FIG. 16 is a diagram illustrating physical downlink shared channel (PDSCH) reception in the unit of multiple resource blocks (RBs) according to a fourth method of embodiment 2 proposed in the disclosure.

FIG. 17 is a diagram illustrating a situation in which a demodulation reference signal (DMRS) symbol of a physical downlink shared channel (PDSCH) overlaps a UL subband according to an embodiment of the disclosure.

FIG. 18 is a diagram illustrating a resource (rate-matched resource) which is not used for a physical downlink shared channel (PDSCH) according to method 1 of embodiment 3 proposed in the disclosure.

FIG. 19 is a diagram illustrating a resource (rate-matched resource) which is not used for a physical downlink shared channel (PDSCH) according to method 1 of embodiment 3 proposed in the disclosure.

FIG. 20 is a diagram illustrating a resource (rate-matched resource) which is not used for a physical downlink shared channel (PDSCH) according to method 2 of embodiment 3 proposed in the disclosure.

FIG. 21 is a diagram illustrating a resource (rate-matched resource) which is not used for a physical downlink shared channel (PDSCH) according to method 3 of embodiment 3 proposed in the disclosure.

FIG. 22 illustrates a structure of a UE in a wireless communication system according to an embodiment of the disclosure.

FIG. 23 illustrates a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

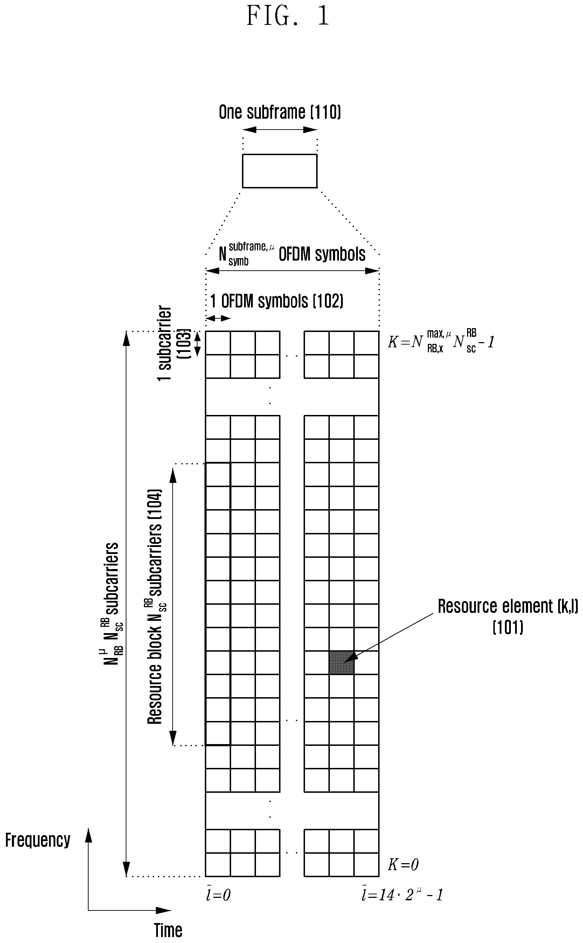

FIG. 1 illustrates a basic structure of a time-frequency domain in a wireless communication system according to an embodiment of the disclosure.

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104.

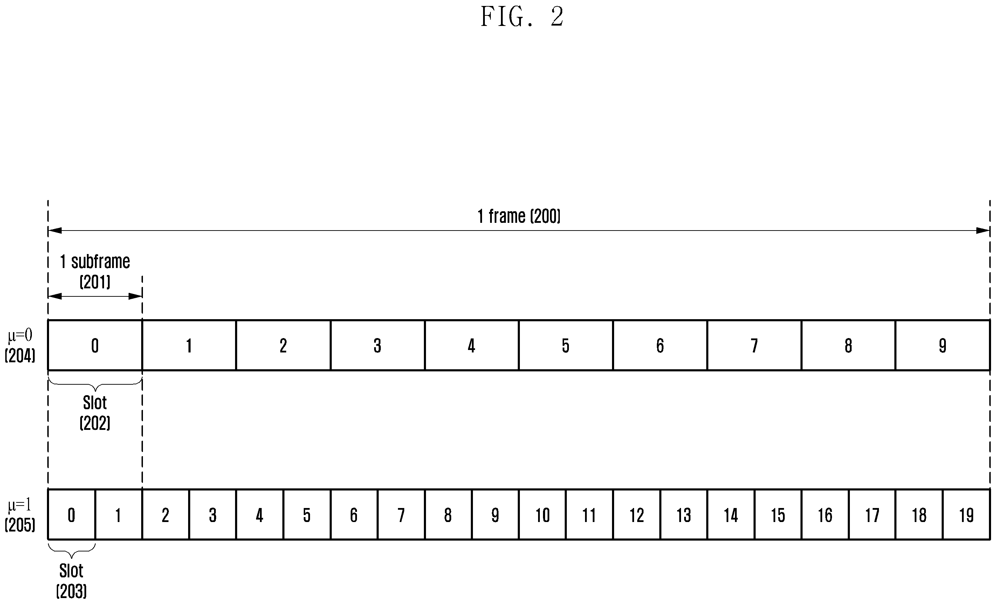

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14

OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu=0$ (204), and a case in which $\mu=1$ (205). In the case of $\mu=0$ (204), one subframe 201 may include one slot 202, and in the case of $\mu=1$ (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Bandwidth part (BWP)

Next, a bandwidth part (BWP) configuration in a 5G communication system will be described in detail with reference to the accompanying drawings.

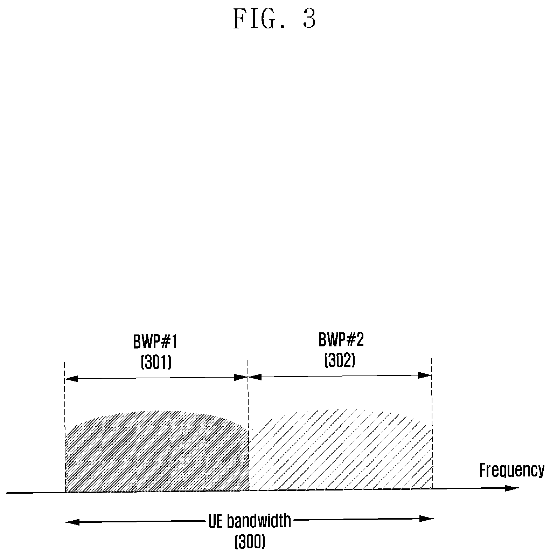

FIG. 3 illustrates an example of bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

| BWP ::= | SEQUENCE { |
|---|---|
| bwp-Id | BWP-Id, |
| (bandwidth part identifier) | |
| locationAndBandwidth | INTEGER (1..65536), |
| (bandwidth part location) | |
| subcarrierSpacing | ENUMERATED {n0, n1, n2, n3, n4, n5}, |
| (subcarrier spacing) | |
| cyclicPrefix | ENUMERATED { extended } |

| (cyclic prefix) |
|---|
| } |

Obviously, the above example is not limiting, and various parameters related to the bandwidth part may be configured for the UE, in addition to the above configuration information. The base station may transfer the configuration information to the UE through upper layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to an embodiment, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control region #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

Bandwidth part (BWP) change

If a UE has one or more bandwidth parts configured therefor, the base station may indicate, to the UE, to change (or switch or transition) the bandwidth parts by using a bandwidth part indicator field inside downlink control information (DCI). As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI **in** the changed bandwidth part with no problem. To this end, requirements for the delay time ($T_{BWP}$) required during a bandwidth part change are specified in standards, and may be defined given **in** Table 3 below, for example.

[Table 3]

| μ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+$T_{BWP}$, and may transmit/receive a data channel scheduled by the corresponding DCI in the newly changed bandwidth part. If the base station wants to schedule a data channel by using the new bandwidth part, the base station may determine time domain resource allocation regarding the data channel, based on the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

Synchronization signal (SS)/physical broadcast channel (PBCH) block

Next, synchronization signal/physical broadcast channel (SS/PBCH) blocks in 5G will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

Physical downlink control channel (PDCCH): regarding downlink control information (DCI)

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by a system information-radio network temporary identifier (SI-RNTI). DCI for scheduling a PDSCH regarding a random access response (RAR) message may be scrambled by an RA-RNTI. DCI for scheduling a PDSCH regarding a paging message may be scrambled by a paging RNTU (P-RNTI). DCI for notifying of a slot format indicator (SFI) may be scrambled by an SFI-RNTI.DCI for notifying of a slot format indicator (SFI) may be scrambled by a slot format indicator-RNTI (SFI-RNTI).

DCI for notifying of transmit power control (TPC) may be scrambled by a transmit power control -RNTI (TPC-RNTI). DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

| |
|---|
| - Identifier for DCI formats - [1] bit |
| - Frequency domain resource assignment - $[\lceil \log_2(N_{\mathrm{RB}}^{\mathrm{UL,BWP}}(N_{\mathrm{RB}}^{\mathrm{UL,BWP}}+1)/2) \rceil ]$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
| • For resource allocation type 0, $\lceil N_{\mathrm{RB}}^{\mathrm{UL,BWP}}/P \rceil$ bits |
| • For resource allocation type 1, $\lceil \log_2(N_{\mathrm{RB}}^{\mathrm{UL,BWP}}(N_{\mathrm{RB}}^{\mathrm{UL,BWP}}+1)/2) \rceil$ bits |
| - Time domain resource assignment -1, 2, 3, or 4 bits |
| - Virtual resource block (VRB)-to-physical resource block (PRB) mapping - 0 or 1 bit, only for resource allocation type 1. |
| • 0 bit if only resource allocation type 0 is configured; |
| • 1 bit otherwise. |
| - Frequency hopping flag - 0 or 1 bit, only for resource allocation type 1. |
| • 0 bit if only resource allocation type 0 is configured; |
| • 1 bit otherwise. |
| - Modulation and coding scheme - 5 bits |
| - New data indicator - 1 bit |
| - Redundancy version - 2 bits |
| - HARQ process number - 4 bits |
| - 1st downlink assignment index- 1 or 2 bits |
| • 1 bit for semi-static HARQ-ACK codebook; |
| • 2 bits for dynamic HARQ-ACK codebook with single HARQ-ACK codebook. |
| - 2nd downlink assignment index - 0 or 2 bits |
| • 2 bits for dynamic HARQ-ACK codebook with two HARQ-ACK sub-codebooks; |
| • 0 bit otherwise. |
| - TPC command for scheduled PUSCH - 2 bits |

(continued)

- SRS resource indicator - $\left\lceil \log_2\left( \sum_{k=1}^{L_{max}} \binom{N_{SRS}}{k} \right) \right\rceil$ or $\left\lceil \log_2(N_{SRS}) \right\rceil$ bits

• $\left\lceil \log_2\left( \sum_{k=1}^{L_{max}} \binom{N_{SRS}}{k} \right) \right\rceil$ bits for non-codebook based PUSCH transmission;

• $\left\lceil \log_2(N_{SRS}) \right\rceil$ bits for codebook based PUSCH transmission. - Precoding information and number of layers - up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DDMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

- Identifier for DCI formats - [1] bit
- Frequency domain resource assignment - $\left[ \left\lceil \log_2(N_{RB}^{DL,BWP}(N_{RB}^{DL,BWP}+1)/2) \right\rceil \right]$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

- Carrier indicator - 0 or 3 bits
- Identifier for DCI formats - [1] bits
- Bandwidth part indicator - 0, 1 or 2 bits
- Frequency domain resource assignment
• For resource allocation type 0, $\left\lceil N_{RB}^{DL,BWP}/P \right\rceil$ bits
• For resource allocation type 1, $\left\lceil \log_2(N_{RB}^{DL,BWP}(N_{RB}^{DL,BWP}+1)/2) \right\rceil$ bits
- Time domain resource assignment -1, 2, 3, or 4 bits
- VRB-to-PRB mapping - 0 or 1 bit, only for resource allocation type 1.
• 0 bit if only resource allocation type 0 is configured;

(continued)

| |
|---|
| • 1 bit otherwise.<br>- Physical resource block (PRB) bundling size indicator - 0 or 1 bit<br>- Rate matching indicator - 0, 1, or 2 bits<br>- Zero power (ZP) channel state information (CSI)-reference signal (RS)<br>trigger - 0, 1, or 2 bits<br>For transport block 1:<br>- Modulation and coding scheme - 5 bits<br>- New data indicator - 1 bit<br>- Redundancy version - 2 bits<br>For transport block 2:<br>- Modulation and coding scheme - 5 bits<br>- New data indicator - 1 bit<br>- Redundancy version - 2 bits<br>- HARQ process number - 4 bits<br>- Downlink assignment index - 0 or 2 or 4 bits<br>- TPC command for scheduled PUCCH - 2 bits<br>- PUCCH resource indicator - 3 bits<br>- PDSCH-to-HARQ_feedback timing indicator - 3 bits<br>- Antenna ports - 4, 5 or 6 bits<br>- Transmission configuration indication - 0 or 3 bits<br>- SRS request - 2 bits<br>- CBG transmission information - 0, 2, 4, 6, or 8 bits<br>- CBG flushing out information - 0 or 1 bit<br><div align="right">- DMRS sequence initialization - 1 bit</div> |

Physical downlink control channel (PDCCH): control resource set (CORESET), resource element group (REG), control channel element (CCE), and search space

Hereinafter, a downlink control channel in a 5G communication system will be described in more detail with reference to the accompanying drawings.

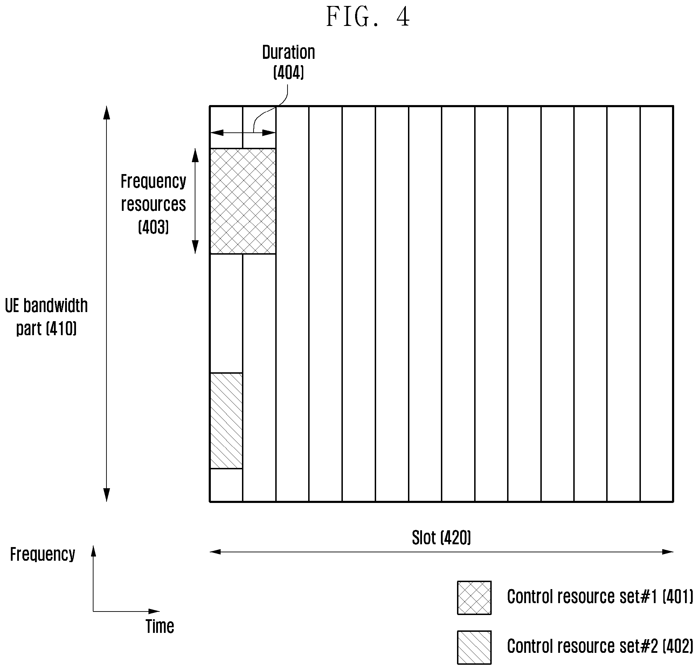

FIG. 4 illustrates an example of a control resource set (CORESET) used to transmit a downlink control channel in a 5G wireless communication system.

FIG. 4 illustrates an example in which a UE bandwidth part 410 is configured along the frequency axis, and two control resource sets (control resource set # 1 420 and control resource set #2 401) are configured within one slot 402 along the time axis. The control resource sets 401 and 402 may be configured in a specific frequency resource 410 within the entire UE bandwidth part 403 along the frequency axis. The control resource sets 401 and 402 may be each configured as one or multiple orthogonal frequency division multiplexing (OFDM) symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE means that information such as a control resource set identity, the control resource set's frequency location, and the control resource set's symbol duration is provided. For example, the control resource set may include the following pieces of information: given in Table 8 below.

[Table 8]

```
ConControlResourceSet ::=                                    SEQUENCE
{
        -- Corresponds to L1 parameter 'CORESET-ID'


        controlResourceSetId
        ControlResourceSetId,
   (control resource set identity)
        frequencyDomainResources                          BIT  STRING
(SIZE (45)),
     (frequency domain resource assignment information)
        duration
        INTEGER (1..maxCoReSetDuration),
     (time domain resource assignment information)
        cce-REG-MappingType
        CHOICE {
```

```
(CCE-to-REG mapping type)
        interleaved
        SEQUENCE {


                reg-BundleSize
        ENUMERATED {n2, n3, n6},
    (REG bundle size)


                precoderGranularity
        ENUMERATED {sameAsREG-bundle, allContiguousRBs},


                interleaverSize
        ENUMERATED {n2, n3, n6}
                (interleaver size)


                shiftIndex
                INTEGER(0..maxNrofPhysicalResourceBlocks-1)


    OPTIONAL
            (interleaver shift)
    },
    nonInterleaved
    NULL
    },
    tci-StatesPDCCH
    SEQUENCE(SIZE (1..maxNrofTCI-StatesPDCCH)) OF TCI-StateId
                            OPTIONAL,
(QCL configuration information)
```

> tci-PresentInDCI
>
> ENUMERATED {enabled}
>
> OPTIONAL,        - Need S
>
> }

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set.

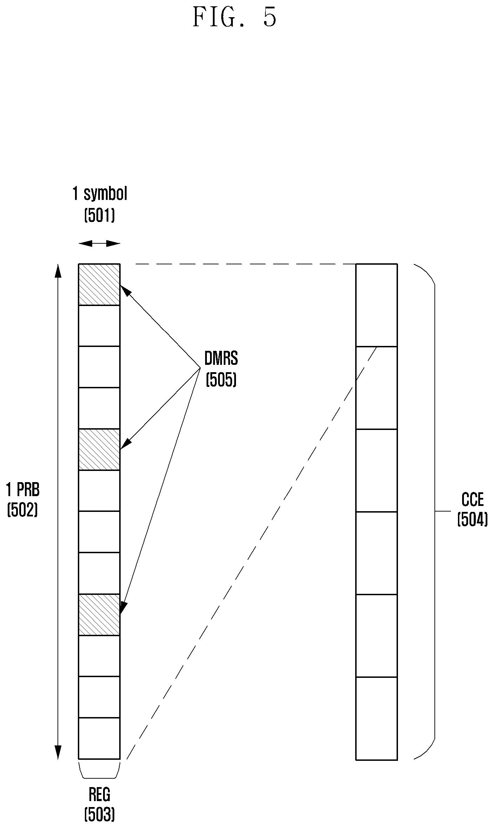

FIG. 5 illustrates an example of a basic unit of time and frequency resources constituting a downlink control channel available in a 5G system.

According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5A, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the control resource set may include the following pieces of information: given in Table 8 below.

[Table 9]

| |
|---|
| SearchSpace ::=                                                    SEQUENCE {<br><br>    -- Identity of the search space. SearchSpaceId = 0 identifies the SearchSpace configured via PBCH (MIB) or ServingCellConfigCommon.<br>       searchSpaceId<br>       SearchSpaceId,<br>  (search space identity) |

```
            controlResourceSetId
            ControlResourceSetId,
    (control resource set identity)
            monitoringSlotPeriodicityAndOffset            CHOICE {
    (monitoring slot level periodicity)
                    sl1
                            NULL,
                    sl2
                            INTEGER (0..1),
                    sl4
                            INTEGER (0..3),
                    sl5
                    INTEGER (0..4),
                    sl8
                            INTEGER (0..7),
                    sl10
                    INTEGER (0..9),
                    sl16
                    INTEGER (0..15),
                    sl20
                    INTEGER (0..19)
            }


                            OPTIONAL,
    duration (monitoring duration)                    INTEGER (2..2559)
            monitoringSymbolsWithinSlot                            BIT
    STRING (SIZE (14))
                                            OPTIONAL,
```

```
        (monitoring symbols within slot)
            nrofCandidates
            SEQUENCE {
(number of PDCCH candidates for each aggregation level)
                aggregationLevel1
            ENUMERATED {n0, n1, n2, n3, n4, n5, n6, n8},
                aggregationLevel2
            ENUMERATED {n0, n1, n2, n3, n4, n5, n6, n8},
                aggregationLevel4
            ENUMERATED {n0, n1, n2, n3, n4, n5, n6, n8},
                aggregationLevel8
            ENUMERATED {n0, n1, n2, n3, n4, n5, n6, n8},
                aggregationLevel16
            ENUMERATED {n0, n1, n2, n3, n4, n5, n6, n8}
            },


            searchSpaceType
            CHOICE {
            (search space type)
                    -- Configures this search space as common search space (CSS)
and DCI formats to monitor.
                common
                        SEQUENCE {
            (common search space)
                }
                    ue-Specific
                    SEQUENCE {
            (UE-specific search space)
```

> -- Indicates whether the UE monitors in this USS for DCI formats 0-0 and 1-0 or for formats 0-1 and 1-1.
>
> formats
>
> ENUMERATED {formats0-0-And-1-0, formats0-1-And-1-1},
>
> ...
>
> }

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI
- Combinations of DCI formats and RNTIs given below may be monitored in a UE-specific search space. Obviously, the examples given below are not limiting.
- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given in Table 10 below, for example.

[Table 10]

| DCI format | Usage |
|---|---|
| 0_0 | Scheduling of PUSCH in one cell |
| 0_1 | Scheduling of PUSCH in one cell |

(continued)

| DCI format | Usage |
|---|---|
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with CORESET p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- $L$: aggregation level

- $n_{CI}$: carrier index

- $N_{CCE,p}$: total number of CCEs existing in control resource set $p$

- $n_{s,f}^{\mu}$ : slot index

- $M_{s,max}^{(L)}$ : number of PDCCH candidates at aggregation level L

- $m_{s,n_{CI}} = 0, \ldots, M_{s,max}^{(L)} - 1$ : PDCCH candidate index at aggregation level L

- $i = 0, ..., L - 1$

-

$$Y_{p,n_{s,f}^{\mu}} = \left( A_p \cdot Y_{p,n_{s,f}^{\mu}-1} \right) mod D, \ Y_{p,-1} = n_{RNTI} \neq 0,$$

      $A_p$ = 39827 *for pmod*3 = 0, $A_p$ = 39829 *for pmod*3 = 1,

      $A_p$ = 39839 *for pmod*3 = 2, *D* = 65537

- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each timepoint may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

Regarding rate matching/puncturing

Hereinafter, a rate matching operation and a puncturing operation will be described in detail.

If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

Rate matching operation

The base station may transmit channel A after mapping the same only to remaining resource domains other than resource C (area overlapping resource B) among the entire resource A which is to be used to transmit symbol sequence A to the UE. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the base station may transmit symbol sequence {symbol#1, symbol#2, symbol#3} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A based on an assumption that symbol sequence A has been mapped and transmitted in the remaining area other than resource C among the entire resource A. For example, if symbol sequence A is configured as {symbol# 1, symbol#2, symbol#3, symbol4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the UE may perform a series of following receiving operations based on an assumption that symbol sequence {symbol#1, symbol#2, symbol#3} has been transmitted after being mapped to {resource#1, resource#2, resource#4}, respectively.

Puncturing operation

If there is resource C (region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may assume that symbol sequence A {symbol#1, symbol#2, symbol#3, symbol4} is mapped to resource A {resource#1, resource#2, resource#3, resource#4}, respectively, but {symbol#3} mapped to {resource#3} (corresponding to resource C) is not transmitted, and based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the base station may transmit symbol sequence {symbol#1, symbol#2, symbol#4} after mapping the same to {resource#1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped to the entire resource A but transmitted only in the remaining area other than resource C among the resource area A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may assume that symbol sequence A {symbol#1, symbol#2, symbol#3, symbol4} is mapped to resource A {resource#1, resource#2, resource#3, resource#4}, respectively, but {symbol#3} mapped to {resource#3} (corresponding to resource C) is not transmitted, and based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol#1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

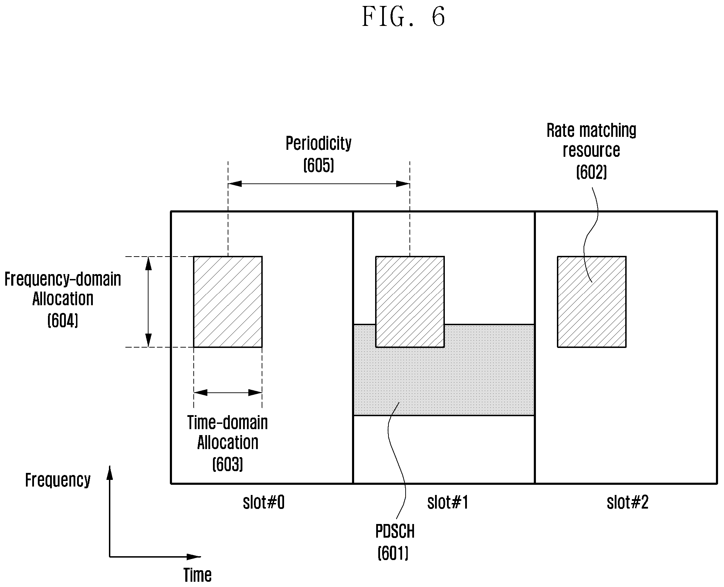

FIG. 6 illustrates a method in which a base station and a UE transmit/receive data in consideration of a downlink data channel and a rate matching resource in a wireless communication system according to an embodiment of the disclosure;

FIG. 6 illustrates a downlink data channel (PDSCH) 601 and a rate matching resource 602. The base station may configure one or multiple rate matching resources 602 for the UE through upper layer signaling (for example, RRC signaling).

Rate matching resource 602 configuration information may include time-domain resource allocation information 603, frequency-domain resource allocation information 604, and periodicity information 605. A bitmap corresponding to the frequency-domain resource allocation information 604 will hereinafter be referred to as "first bitmap", a bitmap corresponding to the time-domain resource allocation information 603 will be referred to as "second bitmap", and a bitmap corresponding to the periodicity information 605 will be referred to as "third bitmap". If all or some of time and frequency resources of the scheduled PDSCH 601 overlap a configured rate matching resource 602, the base station may rate-match and transmit the PDSCH 602 in a rate matching resource 601 part, and the UE may perform reception and decoding after assuming that the PDSCH 602 has been rate-matched in a rate matching resource 601 part.

The base station may dynamically notify the UE, through DCI, of whether the PDSCH will be rate-matched in the configured rate matching resource part through an additional configuration (for example, corresponding to "rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, in a case where rate matching is to be conducted, the base station may indicate this case by "1", and in a case where rate matching is not to be conducted, the base station may indicate this case by "0".

5G supports granularity of "RB symbol level" and "RE level" as a method for configuring the above-described rate matching resources for a UE. More specifically, the following configuration method may be followed.

Physical downlink shared channel (PDSCH)/physical uplink shared channel (PUSCH): regarding frequency resource allocation

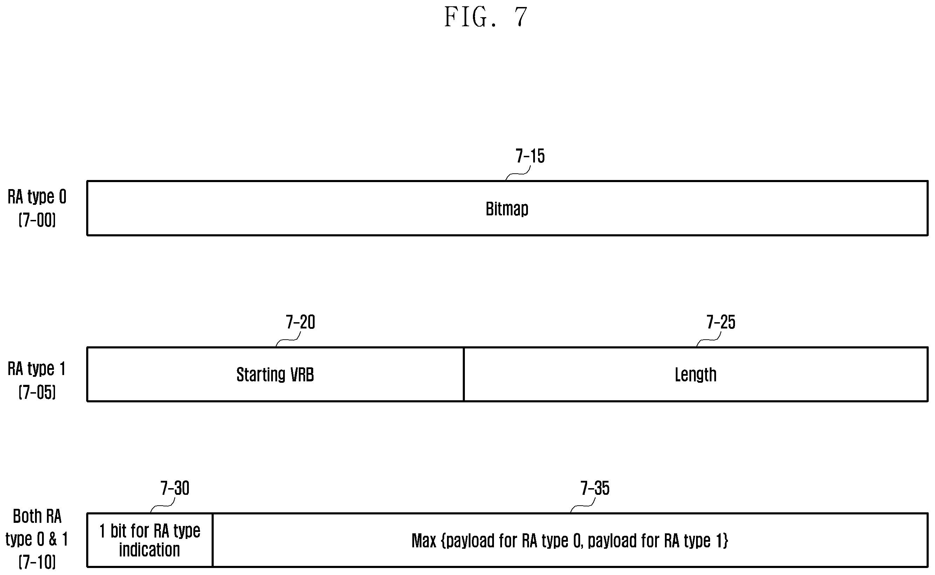

FIG. 7 illustrates an example of frequency domain resource allocation with regard to a physical downlink shared channel (PDSCH) or physical uplink shared channel (PUSCH) in a wireless communication system according to an embodiment of the disclosure.

FIG. 7 illustrates three frequency domain resource allocation methods of type-0 7-00, type-1 7-05, and dynamic switch 7-10 which can be configured through an upper layer in an NR wireless communication system.

Referring to FIG. 7, in the case in which a UE is configured to use only resource type 0 through upper layer signaling (700), partial downlink control information (DCI) for allocating a PDSCH to the UE include a bitmap including $N_{RBG}$ bits. Here, $N_{RBG}$ may refer to the number of resource block groups (RBGs) determined according to the BWP size allocated by a BWP indicator and upper layer parameter rbg-Size, as in Table 11 below, and data is transmitted in RBGs indicated as "1" by the bitmap.

[Table 11]

| Bandwidth Part Size | Configuration 1 | Configuration 2 |
|---|---|---|
| 1 - 36 | 3 | 4 |
| 37 - 72 | 4 | 8 |
| 73 - 144 | 8 | 16 |
| 145 - 275 | 16 | 16 |

The BWP size refers to the number of RBs included in a BWP. More specifically, if resource allocation type-0 is indicated, the length of a frequency domain resource assignment (FDRA) field of DCI received by the UE is equal to the number $N_{RBG}$ of RBGs, and is $N_{RBG} = \left[ \left( N_{BWP}^{size} + \left( N_{BWP}^{start} \bmod P \right) \right) / P \right]$ .. Here, the first RBG includes

$$RBG_0^{size} = P - N_{BWP}^{size} \ mod \ P$$ RBs, and the last RBG includes

$$RBG_{last}^{size} = \left(N_{BWP}^{start} + N_{BWP}^{size}\right) mod \ P$$ RBs if $\left(N_{BWP}^{start} + N_{BWP}^{size}\right) mod \ P > 0$, and otherwise, includes $RBG_{last}^{size} = P \ \mathrm{RBs}$. The other RBGs each include P RBs. Here, P refers to the number of nominal RBGs as determined according to Table 11. If the UE is configured to use only resource allocation type-1 through higher layer signaling (7-05), some DCI for allocating PDSCHs to the UE may include frequency domain resource allocation

information including $\left\lceil log_2(N_{RB}^{DL,BWP}(N_{RB}^{DL,BWP} + 1)/2\right\rceil$ bits. Here, $N_{RB}^{BWP}$ denotes the number of RBs included in a BWP. The base station may thereby configure a starting VRB 7-20 and the length 7-25 of a frequency domain resource allocated continuously therefrom.

In the case in which the UE is configured to use both resource allocation type-0 and resource allocation type-1 through upper layer signaling (7-10), partial DCI for allocating a PDSCH to the corresponding UE includes frequency domain resource allocation information including as many bits as the larger value 7-35 between the payload 7-15 for configuring resource allocation type-0 and the payload 7-20 and 7-25 for configuring resource allocation type-1. The conditions for this will be described again later. One bit may be added to the foremost part (MSB) of the frequency domain resource allocation information inside the DCI, and if the bit has the value of "0", use of resource type- 0 may be indicated, and if the bit has the value of " 1", use of resource type-1 may be indicated.

Physical downlink shared channel (PDSCH)/physical uplink shared channel (PUSCH): regarding time resource allocation

Hereinafter, a time domain resource allocation method regarding a data channel in a next-generation mobile communication system (5G or NR system) will be described.
A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a timepoint at which a PDCCH is received and a timepoint at which a PDSCH scheduled by the received PDCCH is transmitted; labeled K0), PDCCH-to-PUSCH slot timing (for example, corresponding to a slot-unit time interval between a timepoint at which a PDCCH is received and a timepoint at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 12 or Table 13 below may be transmitted from the base station to the UE.

[Table 12]

| PDSCH-TimeDomainResourceAllocationList information element |
|---|
| PDSCH-TimeDomainResourceAllocationList ::= SEQUENCE (SIZE(1..maxNrofDL-Allocations)) OF PDSCH-TimeDomainResourceAllocation<br><br>PDSCH-TimeDomainResourceAllocation ::= SEQUENCE { k0 INTEGER(0..32) OPTIONAL, -- Need S (PDCCH-to-PDSCH timing, slot unit) mappingType ENUMERATED {typeA, typeB}, (PDSCH mapping type) startSymbolAndLength INTEGER (0..127) |

| (start symbol and length of PDSCH) } |
|---|

[Table 13]

---

### *PUSCH-TimeDomainResourceAllocationList information element*

PUSCH-TimeDomainResourceAllocationList     ::=     SEQUENCE (SIZE(1..maxNrofUL-Allocations)) OF

PUSCH-TimeDomainResourceAllocation

PUSCH-TimeDomainResourceAllocation ::=     SEQUENCE {

k2

INTEGER(0..32)     OPTIONAL,     -- Need S

(PDCCH-to-PUSCH timing, slot unit)

mappingType     ENUMERATED

{typeA, typeB},

(PUSCH mapping type)

startSymbolAndLength     INTEGER (0..127)

(start symbol and length of PUSCH)

}

---

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station.

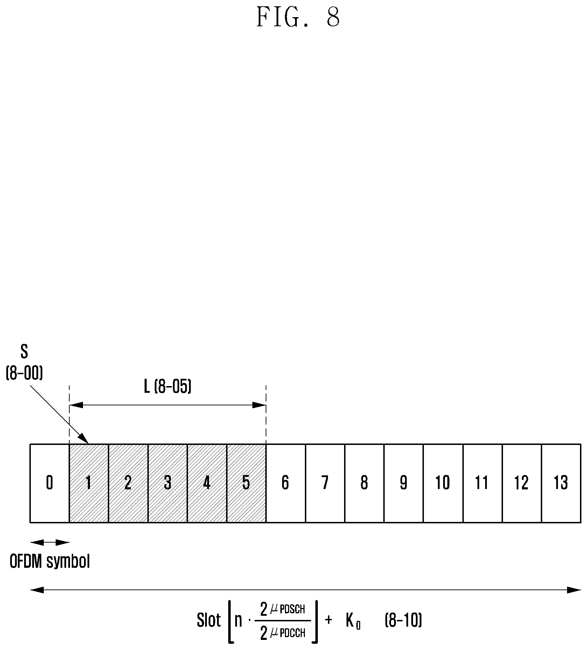

FIG. 8 illustrates an example of time domain resource allocation with regard to a PDSCH in a wireless communication system according to an embodiment of the disclosure.

Referring to FIG. 8, the UE may indicate the time domain location of a PDSCH resource according to the subcarrier spacing (SCS) ($\mu_{PDSCH}$, $\theta_{PDCCH}$) of a data channel and a control channel configured by using an upper layer, the scheduling offset (K0) value, and the OFDM symbol start location 8-00 and length 8-05 within one slot dynamically indicated through DCI.

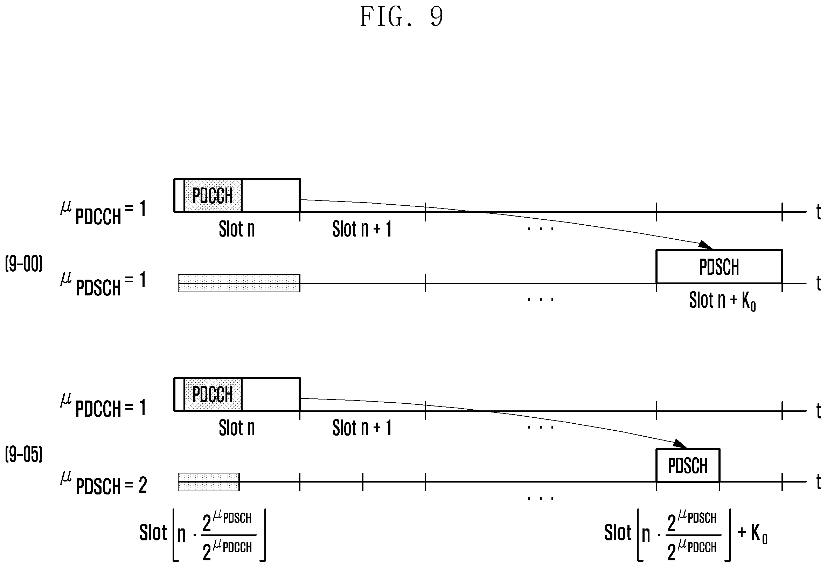

FIG. 9 illustrates an example of time domain resource allocation according to a subcarrier spacing with regard to a data channel and a control channel in a wireless communication system according to an embodiment of the disclosure.

Referring to FIG. 9, if the data channel and the control channel have the same subcarrier spacing (9-00, $\mu_{PDSCH}$ =$\mu_{PDCCH}$), the slot number for data and that for control are identical, and the base station and the UE may accordingly generate a scheduling offset in conformity with a predetermined slot offset K0. On the other hand, if the data channel and the control channel have different subcarrier spacings (9-05, $_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

Physical uplink shared channel (PUSCH): regarding transmission scheme

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 16 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 14 through upper signaling. If PUSCH transmission is operated by a configured grant, parameters applied to the PUSCH transmission are applied through configuredGrantConfig (upper signaling) in Table 14 except for dataScramblingIdentityPUSCH, txConfig, codebookSubset, maxRank, and scaling of UCI-OnPUSCH, which are provided by pusch-Config (upper signaling) in Table 15. If provided with transformPrecoder inside configuredGrantConfig (upper signaling) in Table 14, the UE applies tp-pi2BPSK inside pusch-Config in Table 15 to PUSCH transmission operated by a configured grant.

[Table 14]

| | |
|---|---|
| ConfiguredGrantConfig ::= | SEQUENCE { |
| frequencyHopping | ENUMERATED {intraSlot, interSlot} |
| OPTIONAL, -- Need S, | |
| cg-DMRS-Configuration | DMRS-UplinkConfig, |
| mcs-Table | ENUMERATED {qam256, qam64LowSE} |
| OPTIONAL, -- Need S | |

```
            mcs-TableTransformPrecoder                ENUMERATED  {qam256,
qam64LowSE}
OPTIONAL,      -- Need S
            uci-OnPUSCH                   SetupRelease { CG-UCI-OnPUSCH }
OPTIONAL,      -- Need M
            resourceAllocation                              ENUMERATED
{ resourceAllocationType0, resourceAllocationType1, dynamicSwitch },
            rbg-Size                    ENUMERATED              {config2}
OPTIONAL,      -- Need S
            powerControlLoopToUse              ENUMERATED {n0, n1},
            p0-PUSCH-Alpha                      P0-PUSCH-AlphaSetId,
            transformPrecoder                  ENUMERATED  {enabled,
disabled}                                           OPTIONAL,
-- Need S
            nrofHARQ-Processes               INTEGER(1..16),
            repK                            ENUMERATED  {n1, n2,
n4, n8},
            repK-RV                             ENUMERATED  {s1-
0231,                     s2-0303,                         s3-0000}
OPTIONAL,      -- Need R
            periodicity                        ENUMERATED {
                                              sym2,       sym7,
sym1x14, sym2x14, sym4x14, sym5x14, sym8x14, sym10x14, sym16x14,
sym20x14,
                                                          sym32x14,
sym40x14, sym64x14, sym80x14, sym128x14, sym160x14, sym256x14,
sym320x14, sym512x14,
                                                          sym640x14,
sym1024x14, sym1280x14, sym2560x14, sym5120x14,
```

```
                                              sym6,    sym1x12,
sym2x12, sym4x12, sym5x12, sym8x12, sym10x12, sym16x12, sym20x12,
sym32x12,

                                                     sym40x12,
sym64x12, sym80x12, sym128x12, sym160x12, sym256x12, sym320x12,
sym512x12, sym640x12,

                                                    sym1280x12,
sym2560x12
        },
        configuredGrantTimer                 INTEGER  (1..64)
OPTIONAL,     -- Need R
        rrc-ConfiguredUplinkGrant            SEQUENCE {
                timeDomainOffset                   INTEGER
(0..5119),
                timeDomainAllocation               INTEGER
(0..15),
                frequencyDomainAllocation          BIT  STRING
(SIZE(18)),
                antennaPort                  INTEGER (0..31),
                dmrs-SeqInitialization             INTEGER  (0..1)
OPTIONAL,     -- Need R
                precodingAndNumberOfLayers         INTEGER
(0..63),
                srs-ResourceIndicator        INTEGER (0..15)
OPTIONAL,     -- Need R
                mcsAndTBS                          INTEGER
(0..31),
```

```
        frequencyHoppingOffset                          INTEGER (1..

maxNrofPhysicalResourceBlocks-1)                        OPTIONAL,

-- Need R

        pathlossReferenceIndex                          INTEGER

(0..maxNrofPUSCH-PathlossReferenceRSs-1),

        ...

    }

OPTIONAL,      -- Need R

    ...

            }
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 15, which is upper signaling, is "codebook" or "nonCodebook". As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 15, the UE does not expect scheduling through DCI format 0_1.

[Table 15]

```
PUSCH-Config ::=                                    SEQUENCE {
        dataScramblingIdentityPUSCH                        INTEGER (0..1023)
OPTIONAL,     -- Need S
        txConfig                                           ENUMERATED
{codebook,                                                 nonCodebook}
OPTIONAL,     -- Need S
        dmrs-UplinkForPUSCH-MappingTypeA                   SetupRelease
{                       DMRS-UplinkConfig                              }
OPTIONAL,     -- Need M
        dmrs-UplinkForPUSCH-MappingTypeB                   SetupRelease
{                       DMRS-UplinkConfig                              }
OPTIONAL,     -- Need M


        pusch-PowerControl                                 PUSCH-PowerControl
OPTIONAL,     -- Need M
        frequencyHopping                                   ENUMERATED
{intraSlot, interSlot}                                     OPTIONAL,
-- Need S
        frequencyHoppingOffsetLists           SEQUENCE (SIZE (1..4))
OF INTEGER (1.. maxNrofPhysicalResourceBlocks-1)


OPTIONAL,     -- Need M
        resourceAllocation                                 ENUMERATED
{ resourceAllocationType0, resourceAllocationType1, dynamicSwitch},
```

| | |
|---|---|
| pusch-TimeDomainAllocationList TimeDomainResourceAllocationList } Need M | SetupRelease { PUSCH- OPTIONAL, -- |
| pusch-AggregationFactor n4, n8 } -- Need S | ENUMERATED { n2, OPTIONAL, |
| mcs-Table {qam256, OPTIONAL, -- Need S | ENUMERATED qam64LowSE} |
| mcs-TableTransformPrecoder {qam256, OPTIONAL, -- Need S | ENUMERATED qam64LowSE} |
| transformPrecoder {enabled, OPTIONAL, -- Need S | ENUMERATED disabled} |
| codebookSubset {fullyAndPartialAndNonCoherent, partialAndNonCoherent,nonCoherent} OPTIONAL, -- Cond codebookBased | ENUMERATED |
| maxRank OPTIONAL, -- Cond codebookBased | INTEGER (1..4) |
| rbg-Size { config2} S | ENUMERATED OPTIONAL, -- Need |
| uci-OnPUSCH OnPUSCH} | SetupRelease { UCI- OPTIONAL, -- Need M |
| tp-pi2BPSK {enabled} Need S | ENUMERATED OPTIONAL, -- |

```
        ...
                }
```

Next, codebook-based PUSCH transmission will be described. The codebook-based PUSCH transmission may be dynamically scheduled through DCI format 0_0 or 0_1, and may be semi-statically operated by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". In addition, if the UE reported "nonCoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE transmits, to the base station, one or multiple SRS resources included in the SRS resource set wherein the value of usage is configured as "codebook" according to upper signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be semi-statically operated by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (upper signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS may be indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is positioned in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE does not expect that spatialRelationInfo which is upper signaling regarding the SRS resource and associatedCSI-RS inside SRS-ResourceSet (upper signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station may transmit one NZP-CSI-RS connected to the SRS resource set to the UE, and the UE may calculate the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

Regarding carrier aggregation (CA)/dual connectivity (DC)

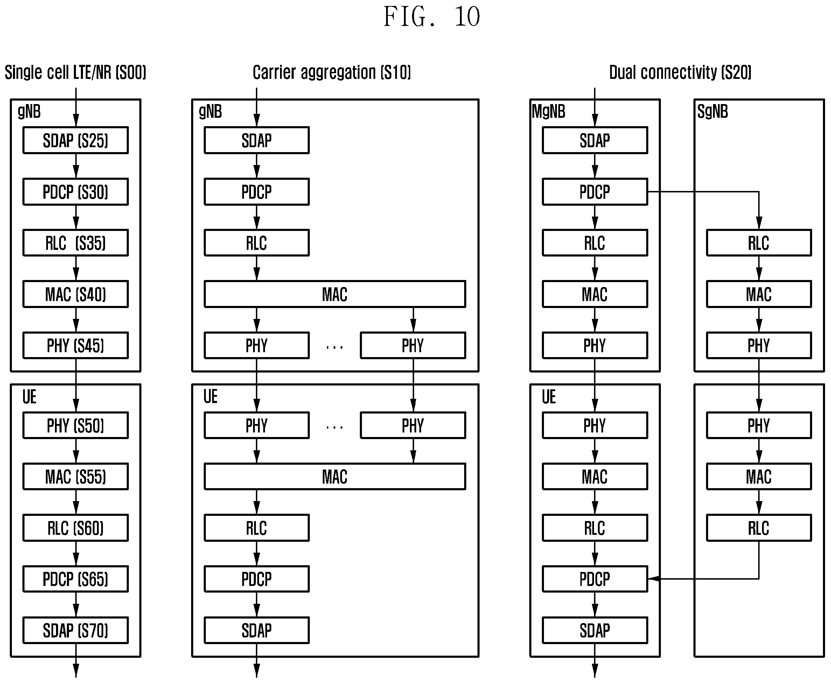

FIG. 10 illustrates radio protocol structures of a base station and a UE in single cell, carrier aggregation, and dual connectivity situations according to an embodiment of the disclosure.

Referring to FIG. 10, the radio protocol of a next-generation mobile communication system includes an NR service data adaptation protocol (SDAP) S25 or S70, an NR packet data convergence protocol (PDCP) S30 or S65, an NR radio link control (RLC) S35 or S60, and an NR medium access controls (MAC) S40 or S55, on each of UE and NR base station sides.

The main functions of the NR SDAP S25 or S70 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP S30 or S65 may include some of functions below.

- Header compression and decompression: ROHC only
- Transfer of user data

- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The above-mentioned reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC S35 or S60 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device refers to a function of delivering RLC SDUs, received from the lower layer, to the upper layer in sequence. The in-sequence delivery of the NR RLC device may include at least one of a function of, if one original RLC SDU is segmented into multiple RLC SDUs and the segmented RLC SDUs are received, reassembling the RLC SDUs and delivering the reassembled RLC SDUs, a function of reordering the received RLC PDUs with reference to the RLC sequence number (SN) or PDCP sequence number (SN), a function of recording RLC PDUs lost as a result of reordering, a function of reporting the state of the lost RLC PDUs to the transmitting side, and a function of requesting retransmission of the lost RLC PDUs. The in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all currently received RLC SDUs to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC S40 or S55 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE

- Priority handling between UEs by means of dynamic scheduling
- MBMS service identification
- Transport format selection
- Padding

An NR PHY layer S45 or S50 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation (CA) which uses multiple carriers in a single TRP, the base station and the UE may use a protocol structure which has a single structure up to the RLC, but multiplexes the PHY layer through a MAC layer, such as S10. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as S20.

Hereinafter, embodiments of the disclosure will be described in detail in conjunction with the accompanying drawings. The contents of the disclosure may be applied to FDD and TDD systems.

As used herein, upper signaling (or upper layer signaling") is a method for transferring signals from a base station to a UE by using a downlink data channel of a physical layer, or from the UE to the base station by using an uplink data channel of the physical layer, and may also be referred to as "RRC signaling", "PDCP signaling", or "MAC control element (MAC CE)".

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Hereinafter, embodiments of the disclosure will be described in detail in conjunction with the accompanying drawings. Hereinafter, a base station refers to an entity that allocates resources to a terminal, and may be at least one of a gNode B, a gNB, an eNode B, a node B, a base station (BS), a radio access unit, a base station controller, or a node on a network. A terminal may include a user equipment (UE), a mobile station (MS), a cellular phone, a smartphone, a computer, or a multimedia system capable of performing a communication function. In the following description, embodiments of the disclosure will be described in connection with 5G systems by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

In the following description of the disclosure, upper layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Regarding subband non-overlapping full duplex (SBFD)

In 3GPP, subband non-overlapping full duplex (SBFD) is being discussed as a new duplex scheme based on new radio (NR).

SBFD is a technology of using a part of a downlink resource as an uplink resource in a time division duplex (TDD) band (spectrum) of a frequency of 6 GHz or below or a frequency of 6 GHz or above to receive uplink transmission from a UE as much as the amount of increased uplink resources so as to expand the uplink coverage of the UE, and receive feedback relating to downlink transmission from the UE in the increased uplink resources so as to reduce feedback delay.

In the disclosure, a UE capable of receiving, from a base station, information on whether SBFD is supported, and performing uplink transmission in a part of a downlink resource may be referred to as an SBFD UE (SBFD-capable UE) for convenience. The SBFD scheme may be defined in the standard, and the following schemes may be considered for the SBFD UE to determine whether SBFD is supported in a specific cell (or frequency or frequency band).

First scheme: Other than a frame structure type of a conventional unpaired spectrum (or time division duplex, TDD) or paired spectrum (or frequency division duplex, FDD), another frame structure type (e.g., frame structure type 2) may be introduced in order to define SBFD. The frame structure type 2 may be defined as being supported in the specific frequency or frequency band, or a base station may indicate to a UE whether SBFD is supported by using system information. An SBFD UE may receive the system information including whether SBFD is supported, and determine whether SBFD is supported in the specific cell (or frequency or frequency band).

Second scheme: Without defining a new frame structure type, whether SBFD is additionally supported in a specific frequency or frequency band of a conventional unpaired spectrum (or TDD) may be indicated. The second scheme may define whether SBFD is additionally supported in the specific frequency or frequency band of the conventional unpaired spectrum, or a base station may indicate to a UE whether SBFD is supported by using system information. An SBFD UE may receive the system information including whether SBFD is supported, and determine whether SBFD is supported in the specific cell (or frequency or frequency band).

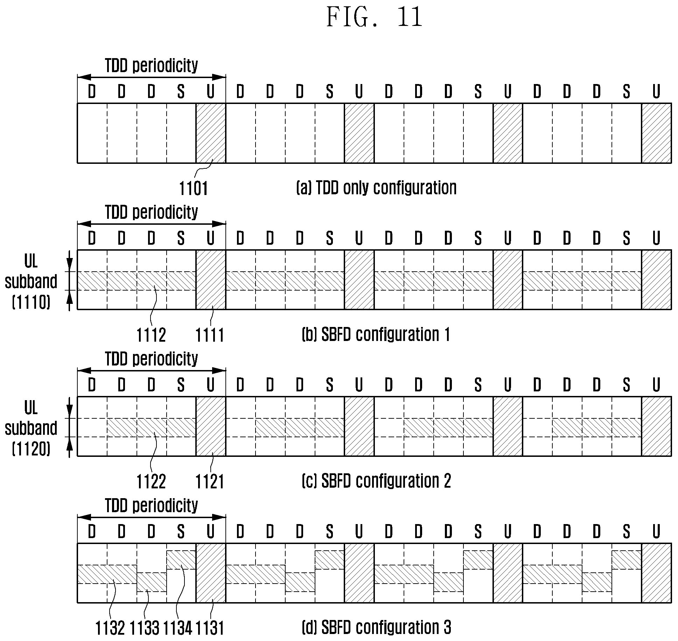

The information on whether SBFD is supported in the first and second schemes may be information (e.g., SBFD resource configuration information in FIG. 11 described later) indirectly indicating whether SBFD is supported, by additionally configuring a part of a downlink resource as an uplink resource in addition to the configuration of TDD uplink (UL)-downlink (DL) resource configuration information indicating a downlink slot (or symbol) resource and an uplink slot (or symbol) resource in TDD, or may be information directly indicating whether SBFD is supported.

In the disclosure, the SBFD UE may receive a synchronization signal block in an initial cell access for accessing a cell (or base station), so as to obtain cell synchronization. A process of obtaining the cell synchronization may be identical or similar for the SBFD UE and an existing TDD UE. Thereafter, the SBFD UE may determine whether the cell supports SBFD, through MIB acquisition, SIB acquisition, or a random access process.

System information for transmitting information on whether SBFD is supported may be system information distinguished from and transmitted separately from system information for a UE (e.g., an existing TDD UE) supporting a different version of protocol in a cell, and the SBFD UE may obtain the entirety or part of the system information transmitted separately from the system information for the existing TDD UE, to determine whether SBFD is supported. When the SBFD UE obtains only the system information for the existing TDD UE or obtains system information indicating that SBFD is not supported, the SBFD UE may determine that the cell (or base station) supports only TDD.

When the information on whether SBFD is supported is included in system information for a UE (e.g., an existing TDD UE) supporting a different version of protocol, the information on whether SBFD is supported may be inserted in the last part of the system information not to affect acquisition of the system information of the existing TDD UE. When the SBFD UE fails to obtain the information on whether SBFD is supported, which is inserted in the last part, or obtains information indicating that SBFD is not supported, the SBFD UE may determine that the cell (or base station) supports only TDD.

When the information on whether SBFD is supported is included in system information for a UE (e.g., an existing TDD UE) supporting a different version of protocol, the information on whether SBFD is supported may be transmitted through a separate PDSCH so as not to affect acquisition of the system information of the existing TDD UE. That is, a non-SBFD-supporting UE may receive a first SIB (or SIB1) including existing TDD-related system information through a first PDSCH. An SBFD-supporting UE may receive the first SIB (or SIB) including the existing TDD-related system information through the first PDSCH, and may receive a second SIB including SBFD-related system information through a second PDSCH. The first PDSCH and the second PDSCH may be scheduled through a first PDCCH and a second PDCCH, and a cyclic redundancy code (CRC) of the first PDCCH and the second PDCCH may be scrambled with the same RNTI (e.g., SI-RNTI). A search space for monitoring the second PDCCH may be obtained from system information of the first PDSCH, and if the same is not obtained (that is, if the system information of the first PDSCH does not include information on the search space), the second PDCCH may be received in the same search space as a search space of the first PDCCH.

As described above, when the SBFD UE determines that the cell (or base station) supports only TDD, the SBFD UE may perform a random access procedure and transmit or receive data/a control signal in the same manner as the existing TDD UE.

A base station may configure a separate random access resource for an existing TDD UE or an SBFD UE (e.g., an SBFD UE supporting duplex communication and an SBFD UE supporting half-duplex communication), and transmit configuration information (e.g., control information or configuration information indicating a time-frequency resource available for a PRACH) on the random access resource to the SBFD UE through system information. The system information for transmitting information on the random access resource may be system information distinguished from and transmitted separately from system information for a UE (e.g., an existing TDD UE) supporting a different version of protocol in a cell.

The base station configures a separate random access resource for each of the SBFD UE and a TDD UE supporting a different version of protocol, thereby being able to distinguish whether the TDD UE supporting the different version of protocol performs a random access or the SBFD UE performs a random access. For example, the separate random access resource configured for the SBFD UE may be a resource that the existing TDD UE determines as a downlink time resource, and the SBFD UE performs a random access through an uplink resource (or separate random access resource) configured in some frequencies of the downlink time resource, so that the base station may determine that the UE which has attempted the random access in the uplink resource is the SBFD UE.

Alternatively, the base station may not configure a separate random access resource for the SBFD UE, and may configure a common random access resource for all UEs in a cell. In this case, the configuration information on the random access resource may be transmitted to all the UEs in the cell through system information, and the SBFD UE having received the system information may perform a random access on the random access resource. Thereafter, the SBFD UE may complete a random access process to enter an RRC connection mode for transmission or reception of data with the cell. After the RRC connection mode, the SBFD UE may receive, from the base station, a higher layer signal or a physical signal enabling determination that a partial frequency resource of the downlink time resource is configured as an uplink resource, and thus perform an SBFD operation, for example, transmit an uplink signal in the uplink resource.

When the SBFD UE determines that the cell supports SBFD, the SBFD UE transmits, to the base station, capability information including at least one of whether the UE supports SBFD, whether the UE supports full-duplex communication or half-duplex communication, and the number of transmission or reception antennas included in (or supported by) the UE, thereby notifying the base station that the UE attempting to access is the SBFD UE. Alternatively, when support of half-duplex communication is necessarily implemented for the SBFD UE, whether the half-duplex communication is supported may be omitted from the capability information. A report of the SBFD UE on the capability information may be reported to the base station through a random access process, may be reported to the base station after completion of the random access process, or may be reported to the base station after entering the RRC connection mode for transmission or reception of the data with the cell.

The SBFD UE may support half-duplex communication in which only uplink transmission or downlink reception is performed at one time like the existing TDD UE, or may support full-duplex communication in which both uplink transmission and downlink reception are performed at one time. Therefore, the SBFD UE may report, to the base station through capability reporting, whether the SBFD UE supports the half-duplex communication or full-duplex communication, and after the reporting, the base station may configure, for the SBFD UE, whether the SBFD UE is to use half-duplex communication for transmission or reception or is to use full-duplex communication for transmission or reception. When the SBFD UE reports the capability for the half-duplex communication to the base station, since a duplexer generally does not exist, a switching gap for changing an RF between transmission and reception may be required in a case of operating in FDD or TDD.

FIG. 11 illustrates an example in which SBFD is operated in a TDD band of a wireless communication system to which the disclosure is applied.

Case (a) of FIG. 11 illustrates a case where TDD is operated in a specific frequency band. In a cell operating TDD, a base station may transmit or receive, to or from an existing TDD UE or an SBFD UE, a signal including data/control information in a downlink slot (or symbol), an uplink slot (or symbol) 1101, and a flexible slot (or symbol), based on a configuration of TDD UL-DL resource configuration information indicating a downlink slot (or symbol) resource and an uplink slot (or symbol) resource in TDD.

It may be assumed that a DDDSU slot format is configured according to the TDD UL-DL resource configuration information in FIG. 11. Here, "D" is a slot consisting entirely of downlink symbols, "U" is a slot consisting entirely of uplink symbols, and "S" is a slot that is neither "D" nor "U", that is, a slot including a downlink symbol, an uplink symbol, or a flexible symbol. Here, for convenience, S may be assumed to include 12 downlink symbols and two flexible symbols. Further, the DDDSU slot format may be repeated according to the TDD UL-DL resource configuration information. That is, a repetition period of a TDD configuration is 5 slots (5 ms for 15 kHz SCS, 2.5 ms for 30 kHz SCS, etc.).

Next, cases (b), (c), and (d) of FIG. 11 illustrate a case where SBFD is operated together with TDD in a specific frequency band.

Referring to case (b) of FIG. 11, a UE may receive a configuration of a part of a frequency band of a cell as a frequency band 1110 available for uplink transmission. This band may be referred to as an uplink subband (UL subband). Further, the uplink subband (UL subband) may be applied to all symbols of all slots. The UE may transmit an uplink channel or signal scheduled for all symbols 1112 within the subband (UL subband). However, the UE cannot transmit an uplink channel or signal in a band other than the subband (UL subband). In addition, the UE may transmit an uplink channel or signal in an uplink slot (or symbol) 1111.

Referring to case (c) of FIG. 11, the UE may receive a configuration of a part of a frequency band of a cell as a frequency band 1120 available for uplink transmission, and may receive a configuration of a time domain in which the frequency band is activated. This frequency band may be referred to as an uplink subband (UL subband). In case (c) of FIG. 11, the uplink subband (UL subband) is deactivated in a first slot, and the uplink subband (UL subband) may be activated in the remaining slots. Therefore, the UE may transmit an uplink channel or signal in an uplink subband (UL subband) 1122 of the remaining slots. Here, the uplink subband (UL subband) is activated in slot units, but whether the uplink subband is activated may be configured in symbol units. In addition, the UE may transmit an uplink channel or signal in an uplink slot (or symbol) 1121.

Referring to case (d) of FIG. 11, the UE may receive a configuration of a time-frequency resource available for uplink transmission. The UE may receive a configuration of one or more time-frequency resources as a time-frequency resource available for uplink transmission. For example, a partial frequency band 1132 of a first slot and a second slot may be configured as a time-frequency resource available for uplink transmission. In addition, a partial frequency band 1133 of a third slot and a partial frequency band 1134 of a fourth slot may be configured as time-frequency resources available for uplink transmission. In addition, the UE may transmit an uplink channel or signal in an uplink slot (or symbol) 1131.

In the following description, a time-frequency resource available for uplink transmission within a downlink symbol or slot may be referred to as an SBFD resource. In addition, a symbol in which an uplink subband is configured within a downlink symbol may be referred to as an SBFD symbol. In addition, a time-frequency resource available for downlink reception within an uplink symbol or slot may be referred to as an SBFD resource. In addition, a symbol in which a downlink subband is configured within an uplink symbol may be referred to as an SBFD symbol.

For convenience, in this disclosure, a band in which downlink channel or signal reception is possible, excluding an uplink subband, is referred to as a downlink subband. The UE is able to configure up to one uplink subband and up to two downlink subbands for one symbol. For example, the UE may receive a configuration of one of {uplink subband, downlink subband}, {downlink subband, uplink subband}, and {first downlink subband, uplink subband, second downlink subband} in the frequency domain.

Unless otherwise specifically stated in the description of the disclosure, the overlapping of a PDSCH scheduling region with a UL subband may include overlapping in the time-frequency domain (that is, when a PDSCH is scheduled in the same RB of the same symbol and a UL subband is configured) and overlapping in the time domain (that is, when a PDSCH is scheduled in the same symbol and a UL subband is configured, where the PDSCH scheduling and the UL subband configuration may or may not overlap in the frequency domain).

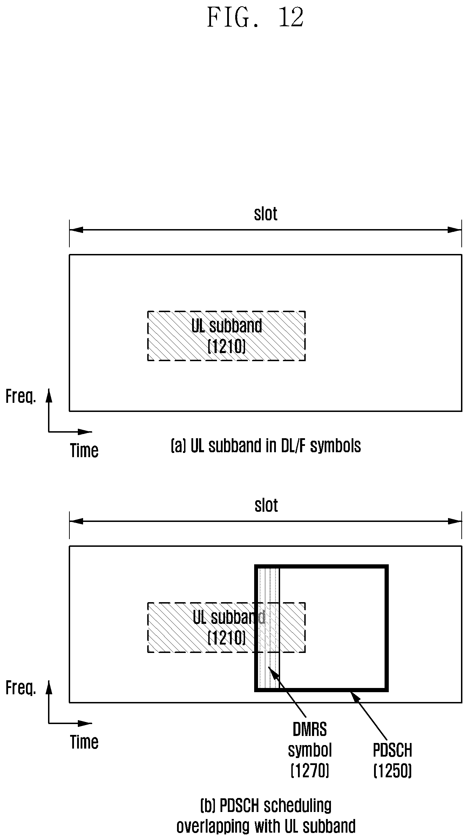

FIG. 12 is a diagram illustrating a UL subband configuration and physical downlink shared channel (PDSCH) scheduling within a slot according to an embodiment of the disclosure.

A UE may receive an indication of a PDSCH scheduling region from a DCI format. Here, time domain allocation information of a PDSCH may be indicated through a time domain resource assignment (TDRA) field of the DCI format, and frequency domain allocation information may be indicated through a frequency domain resource assignment (FDRA) field of the DCI format.

In addition, the UE may receive a configuration of a UL subband in a DL symbol or a flexible symbol from a higher layer signal. Referring to case (a) of FIG. 12, the UE may receive a configuration of whether each symbol is a DL symbol, a UL symbol, or a flexible symbol from the higher layer signal. In addition, a partial frequency band in the DL symbol or the flexible symbol may be configured as a UL subband for uplink transmission. In the following description, the term "UL subband" may refer to (or mean) a time (symbol)-frequency (resource block, RB) resource for which a UL subband is configured.

The UE is required to identify a position of a symbol in which a first DMRS of a scheduled PDSCH is transmitted. Here, PDSCH mapping type B is assumed. In the case of PDSCH mapping type B, a position of the first DMRS may be the earliest symbol among symbols for which a PDSCH is scheduled.

Referring to case (b) of FIG. 12, a UL subband may be configured for a first DMRS symbol 1270 of a PDSCH 1250 scheduled by the UE. In addition, the UL subband may overlap a frequency (RB) resource for which the PDSCH is scheduled in the first DMRS symbol. In this case, the UE cannot receive a first DMRS in some frequency resources of the first DMRS symbol. This is because the some frequency resources overlap the UL subband. Therefore, the UE is required to determine a resource that may be used for the scheduled PDSCH according to a UL subband configuration.

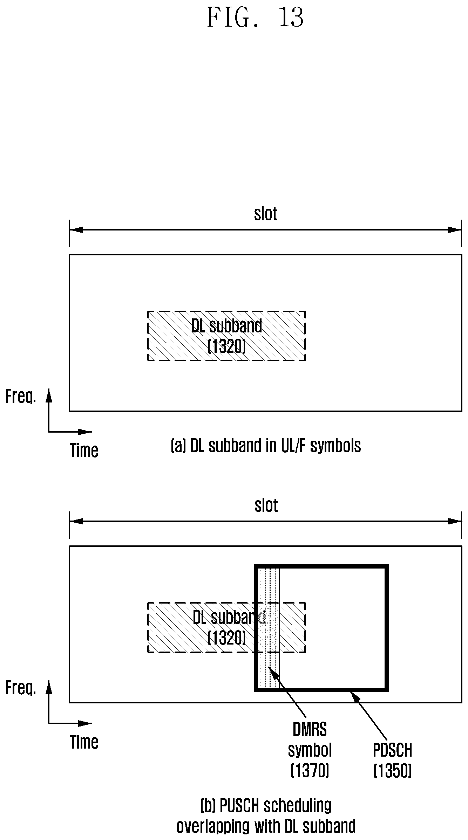

FIG. 13 is a diagram illustrating a DL subband configuration and physical uplink shared channel (PUSCH) scheduling within a slot according to an embodiment of the disclosure.

A UE may receive an indication of a PUSCH scheduling region from a DCI format. Here, time domain allocation information of a PUSCH may be indicated through a time domain resource assignment (TDRA) field of the DCI format, and frequency domain allocation information may be indicated through a frequency domain resource assignment (FDRA) field of the DCI format.

In addition, the UE may receive a configuration of a DL subband in a UL symbol or a flexible symbol from a higher layer signal. Referring to case (a) of FIG. 13, the UE may receive a configuration of whether each symbol is a DL symbol, a UL symbol, or a flexible symbol from the higher layer signal. In addition, a partial frequency band in the UL symbol or the flexible symbol may be configured as a DL subband for downlink transmission. In the following description, the term "DL subband" may refer to a time (symbol)-frequency (resource block, RB) resource for which a DL subband is configured.

The UE is required to identify a position of a symbol in which a first DMRS of a scheduled PUSCH is transmitted. Here, PUSCH mapping type B is assumed. In the case of PDSCH mapping type B, a position of the first DMRS may be the earliest symbol among symbols for which a PUSCH is scheduled.

Referring to case (b) of FIG. 13, a DL subband may be configured for a first DMRS symbol 1370 of a PUSCH 1350 scheduled by the UE. In addition, the DL subband may overlap a frequency (RB) resource for which the PUSCH is scheduled in the first DMRS symbol. In this case, the UE cannot receive a first DMRS in some frequency resources of the first DMRS symbol. This is because the some frequency resources overlap the DL subband. Therefore, the UE is required to determine a resource that may be used for the scheduled PUSCH according to a DL subband configuration.

For convenience of description, the following description will focus on a PDSCH. As described with reference to FIG. 13, a case that may occur in the case of PDSCH may also occur in the case of PUSCH. Therefore, the following description may also be applied to a PUSCH. If the following description is applied to a PUSCH, a PDSCH may be interpreted as being replaced with a PUSCH, and a UL subband may be interpreted as being replaced with a DL subband.

Embodiment 1. Physical downlink shared channel (PDSCH) rate matching and rate matching unit determination based on a UL subband

In embodiment 1 of the disclosure, a UE may receive a configuration of one or multiple UL subbands from a base station. Each of the one or multiple UL subbands may include information on OFDM symbols for which a UL subband is configured and information on configured RBs. Furthermore, each of the UL subbands may include a first subcarrier spacing for the configured OFDM symbols and a second subcarrier spacing for the RBs. The two subcarrier spacings may be the same or different.

When multiple UL subbands are configured, the first subcarrier spacing may be the same for all the UL subbands. That is, the UE may identify OFDM symbols configured for all the UL subbands, based on one first subcarrier spacing. When multiple UL subbands are configured, the second subcarrier spacing may be the same for all the UL subbands. That is, the UE may identify RBs configured for all the UL subbands, based on one second subcarrier spacing.

When multiple UL subbands are configured, the first subcarrier spacing may be configured to be the same or different for each UL subband. That is, the UE may identify OFDM symbols configured for each UL subband, based on the first subcarrier spacing configured for each UL subband. When multiple UL subbands are configured, the second subcarrier spacing may be configured to be the same or different for each UL subband. That is, the UE may identify RBs configured for each UL subband, based on the second subcarrier spacing configured for each UL subband.

In addition, each UL subband may have a unique index. For example, two UL subbands may be configured for the UE, and a unique index of 0 may be assigned to a first UL subband, and a unique index of 1 may be assigned to a second UL subband. Therefore, the UE may identify a UL subband, based on the index.

In addition, when multiple UL subbands are configured, the UE may identify one of the multiple UL subbands as an active UL subband. For example, it may be indicated through a higher layer signal configured for the UE (for example, a system information block (SIB), radio resource control (RRC), downlink control information (DCI) transmitted to the UE, or a medium access control-control element (MAC-CE)). The higher layer signal, DCI, or MAC-CE may include a unique index of an active UL subband, and the UE may identify a UL subband corresponding to the received unique index as an active UL subband.

When the UE receives a configuration (indication) of an active UL subband, the UE may transmit an uplink signal or channel in the active UL subband unless there is a separate indication, but cannot receive a downlink signal or channel in the active UL subband.

Meanwhile, according to the higher layer signal (system information block (SIB) or radio resource control (RRC)), the UE may receive a configuration of whether the UE may receive a downlink signal or channel in the active UL subband. That is, when the UE receives an indication through the higher layer signal that the UE may receive a downlink signal or channel in a certain UL subband, the UE may receive a downlink signal or channel in the UL subband. For reference, in the case where the higher layer signal does not exist, the basic operation of the UE is to be able to transmit an uplink channel or signal in the active UL subband, but not to receive a downlink channel or signal.

According to an embodiment of the disclosure, the higher layer signal may configure whether a downlink signal or channel may be received for each UL subband. That is, it is possible to configure a downlink signal or channel to be received in a certain UL subband, but a downlink signal or channel not to be received in other UL subbands.

Alternatively, the higher layer signal may configure whether a downlink signal or channel may be received for all UL subbands. That is, all UL subbands may be configured to receive a downlink signal or channel, or all UL subbands may be configured not to receive a downlink signal or channel.

Meanwhile, the higher layer signal may indicate whether a downlink signal or channel can be received in a UL subband. For example, the higher layer signal may indicate whether a downlink signal or channel configured by a higher layer can be received in the UL subband. Here, the downlink signal and channel configured by the higher layer may include at least periodic CSI-RS, PDCCH monitoring, SPS PDSCH reception, and the like. In addition, the higher layer signal may indicate whether a downlink signal or channel indicated by DCI can be received in the UL subband.

In addition, the higher layer signal may configure whether a downlink signal or channel can be received only in some symbols or some RBs in the UL subband. Hereinafter, in the description of the disclosure, it is assumed that all symbols or all RBs of the UL subband are commonly configured to be capable of receiving a downlink signal or channel, but this is for convenience of description and the disclosure is not limited thereto.

According to an embodiment of the disclosure, the UE may receive an indication of whether a downlink signal or channel may be received in an active UL subband, through DCI which schedules a downlink signal or channel. That is, when the UE receives the DCI and the DCI indicates that a downlink signal or channel may be received in the active UL subband, the UE may receive a downlink signal or channel in the active UL subband. Conversely, when the DCI indicates that a downlink signal or channel cannot be received in the active UL subband, the UE cannot receive a downlink signal or channel in the active UL subband.

Meanwhile, it is possible to indicate whether a downlink signal or channel can be received in a UL subband through the higher layer signal and the DCI. For example, the UE may identify whether a downlink signal or channel can be received in the UL subband through the higher layer signal and the DCI according to the following method.

When the UE receives a configuration that a downlink signal or channel cannot be received in the UL subband through the higher layer signal, the UE always assumes that a downlink signal or channel cannot be received in the UL subband. That is, the UE does not expect to receive an indication through the DCI that a downlink signal or channel may be received in the UL subband. If a bit field indicating whether to receive a downlink signal or channel in the UL subband exists in the DCI, it is expected that the bit field always indicates that a downlink signal or channel cannot be received in the UL subband. In addition, when the higher layer signal indicates that a downlink signal or channel cannot be received in the UL subband, the bit field may not be included in the DCI. For reference, the UE may not receive a downlink signal or channel configured by the higher layer signal in the UL subband.

When the UE receives a configuration that a downlink signal or channel may be received in the UL subband through the higher layer signal, the UE may receive an indication through the DCI that a downlink signal or channel may be received in the UL subband. If a bit field indicating whether to receive a downlink signal or channel in the UL subband exists in the DCI, whether to receive a downlink signal or channel in the UL subband may be determined according to a value of the bit field. In this case, the DCI may include the bit field. That is, the higher layer signal is configured to allow reception of a downlink signal or channel in the UL subband, and whether a downlink signal or channel can be received in the UL subband may be finally indicated through the bit field of the DCI. For reference, the UE may receive a downlink signal or channel configured by the higher layer signal in the UL subband. This may be determined regardless of the bit field of the DCI.

Alternatively, when the UE receives a configuration through the higher layer signal that a downlink signal or channel cannot be received in the UL subband, the UE may receive an indication through the DCI that a downlink signal or channel may be received in the UL subband. If a bit field indicating whether to receive a downlink signal or channel in the UL subband exists in the DCI, whether to receive a downlink signal or channel in the UL subband may be determined according to a value of the bit field. In this case, the DCI may include the bit field. That is, the higher layer signal is configured to not allow reception of a downlink signal or channel in the UL subband, and whether a downlink signal or channel can be received in the UL subband may be finally indicated through the bit field of the DCI. For reference, the UE cannot receive a downlink signal or channel configured by the higher layer signal in the UL subband. This may be determined regardless of the bit field of the DCI.

Alternatively, the UE may always assume that a downlink signal or channel may be received in the UL subband. That is, the UE does not expect to receive an indication through the DCI that a downlink signal or channel cannot be received in the UL subband. If a bit field indicating whether to receive a downlink signal or channel in the UL subband exists in the DCI, it is expected that the bit field always indicates that a downlink signal or channel may be received in the UL subband. In addition, when the higher layer signal indicates that a downlink signal or channel may be received in the UL subband, the bit field may not be included in the DCI. For reference, the UE may receive a downlink signal or channel configured by the higher layer signal in the UL subband.

Meanwhile, whether or not the bit field is to be included in the DCI may be configured according to the higher layer signal. If the DCI does not include the bit field, the UE may identify whether a downlink signal or channel may be received in the UL subband, based on a configuration of the UL subband. The higher layer signal may configure whether or not the bit field is to be included in the DCI differently for each DCI format. For example, the bit field may be configured to exist in DCI format 1_1, and the bit field may be configured not to exist in DCI format 1_2. Therefore, whether a downlink signal or channel can be received in the UL subband may be determined according to a DCI format received by the UE.

According to an embodiment of the disclosure, the bit field may not be included in DCI format 1_0. In this case, the UE may receive a downlink signal or channel scheduled by DCI format 1_0 in the UL subband, based on a configuration of the UL subband. In another method, the UE may assume that a downlink signal or channel scheduled by DCI format 1_0 can always be received in all UL subbands. This means that when a downlink signal or channel scheduled by DCI format 1_0 is received, a configuration of the UL subband is ignored.

Meanwhile, when the UE identifies whether a downlink signal or channel scheduled by DCI format 1_0 can be received in a UL subband, the UE may identify the receivability based on the type of signal for which the UL subband is configured. The UE may assume that a downlink signal or channel scheduled by DCI format 1_0 can be received in a UL subband configured by an RRC signal. This means that when a downlink signal or channel scheduled by DCI format 1_0 is received, a configuration of the UL subband configured by the RRC signal is ignored. However, the UE may assume that a downlink signal or channel scheduled by DCI format 1_0 cannot be received in a UL subband configured by an SIB signal.

Alternatively, when the UE identifies whether a downlink signal or channel scheduled by DCI format 1_0 can be received in a UL subband, the UE may identify whether a higher layer signal for which the UL subband is configured is cell common or dedicated. Here, "cell common" may refer to a higher layer signal that is applied equally to all UEs within a cell, such as an RRC signal containing cell common information among an SIB or RRC signal. "Dedicated" refers to an RRC signal that is applied to only one UE among RRC signals. The UE may assume that a downlink signal or channel scheduled by DCI format 1_0 can be received in a UL subband configured by a dedicated higher layer signal. This means that when a downlink signal or channel scheduled by DCI format 1_0 is received, a configuration of the UL subband configured by the dedicated higher layer signal is ignored. However, the UE may assume that a downlink signal or channel scheduled by DCI format 1_0 cannot be received in a UL subband configured by a cell common higher layer signal.

Alternatively, when the UE identifies whether a downlink signal or channel scheduled by DCI format 1_0 can be received in a UL subband, the UE may identify the receivability based on an RNTI in DCI format 1_0. The RNTI may be divided into a first RNTI and a second RNTI. The UE may assume that a downlink signal or channel scheduled by DCI format 1_0 with CRC scrambled by the first RNTI can be received in the UL subband. However, the UE may assume that a downlink signal or channel scheduled by DCI format 1_0 with CRC scrambled by the second RNTI cannot be received in the UL subband. Here, the first RNTI may include at least one of a P-RNTI, an SI-RNTI, an RA-RNTI, an MsgB-RNTI, and a TC-RNTI, and the second RNTI may include at least one of a C-RNTI, an MCS-C-RNTI, and a CS-RNTI.

Alternatively, when the UE identifies whether a downlink signal or channel scheduled by DCI format 1_0 can be received in the UL subband, the UE may identify the receivability based on a search space type. The search space type may be divided into a first search space type and a second search space type. The UE may assume that a downlink signal or channel scheduled by DCI format 1_0, received in the first search space type, can be received in the UL subband. However, the UE may assume that a downlink signal or channel scheduled by DCI format 1_0, received in the second search space type, cannot be received in the UL subband. Here, the first search space type may correspond to a common search space, and the second search space type may correspond to a UE-specific search space. Here, the first search space type may correspond to a common search space excluding a type-3 common search space, and the second search space type may correspond to the UE-specific search space and the type-3 common search space.

Meanwhile, when a DCI format is a DCI format that activates an SPS PDSCH, the UE may receive an indication of whether a downlink signal or channel can be received in the UL subband from the DCI format, and the indication may be applied equally to all SPS PDSCHs activated by the DCI format.

For convenience of description, the following description assumes that the UE has acquired information on one unique active UL subband. Further, it is assumed that the UE has received an indication that a downlink signal or channel cannot be received in the active UL subband. In addition, it is assumed that the UE has received scheduling of a PDSCH.

The UE may identify REs that overlap a UL subband among REs included in the scheduled PDSCH. Here, an RE corresponds to one subcarrier in one OFDM symbol. The identification process is as follows. An OFDM symbol included in the UL subband is determined by a first subcarrier spacing, and an RB (or subcarrier) included in the UL subband may be determined by a second subcarrier spacing. Therefore, the UE may determine REs included in the UL subband, based on the first subcarrier spacing and the second subcarrier spacing. The UE may identify whether the REs included in the UL subband are included in the REs included in the scheduled PDSCH. Here, the REs included in the UL subband and the REs included in the scheduled PDSCH may have different subcarrier spacings. In this case, even when the REs included in the PDSCH partially overlap the REs included in the UL subband, the REs included in the PDSCH may be identified as overlapping REs. When the REs included in the PDSCH do not completely overlap the REs included in the UL subband, the REs included in the PDSCH may be identified as non-overlapping REs. The UE may exclude the overlapping REs from PDSCH reception.

Embodiment 2. Physical downlink shared channel (PDSCH) rate matching and rate matching unit determination based on a UL subband in a demodulation reference signal (DMRS) symbol

When an RE in which a DMRS of a PDSCH is transmitted is an RE overlapping a UL subband, the UE cannot transmit the DMRS in the RE. Here, a symbol in which the DMRS is transmitted may be referred to as a DMRS symbol, and may be referred to by the same or similar term.

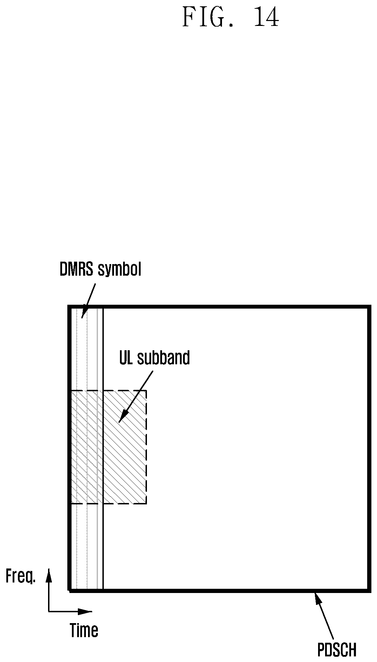

FIG. 14 is a diagram illustrating a situation in which a demodulation reference signal (DMRS) symbol of a physical downlink shared channel (PDSCH) overlaps a UL subband according to an embodiment of the disclosure.

Referring to FIG. 14, since an RE in which a DMRS is transmitted in a DMRS symbol of a PDSCH overlaps a UL subband, a UE cannot receive the DMRS in the RE. In this case, the UE may receive the PDSCH in the DMRS symbol according to the following method.

In a first method, when an RE in which a DMRS of a PDSCH is transmitted is an RE overlapping a UL subband, the UE may not receive the PDSCH. That is, when the UE does not fully receive (or cannot receive) the DMRS of the PDSCH, there may be a problem with channel estimation performance, and thus the UE may not receive the PDSCH.

The first method may be applied to PDSCH repeated reception or SPS PDSCH reception in the same or similar manner. For example, in the case of PDSCH repeated reception, when a PDSCH is repeatedly received for each slot, whether an RE in which a DMRS of a PDSCH in each slot is transmitted is an overlapping RE may be identified, and if an RE in which the DMRS of the PDSCH is transmitted in a certain slot is an overlapping RE, the PDSCH may not be received in the slot. In addition, in the case of SPS PDSCH reception, when an SPS PDSCH is received in a slot for each period, whether an RE in which a DMRS of an SPS PDSCH in each slot is transmitted is an overlapping RE may be identified, and if an RE in which the DMRS of the SPS PDSCH is transmitted in a certain slot is an overlapping RE, the SPS PDSCH may not be received in the slot.

In a second method, when REs in which a DMRS of a PDSCH is transmitted are REs overlapping a UL subband, the UE may not use the overlapping REs for PDSCH reception. That is, the overlapping REs are excluded from the PDSCH, and even if the overlapping REs are the REs in which the DMRS is transmitted, the REs may be excluded. In this case, since the UE cannot receive all the REs in which the DMRS is transmitted, the channel estimation performance may be degraded. However, since the PDSCH may be decoded even with the degraded channel estimation, the UE receives the PDSCH.

In a third method, when an RE in which a DMRS of a PDSCH is transmitted is an RE overlapping a UL subband, the UE may not use an RB including the overlapping RE for PDSCH reception. In the second method, only an overlapping RE is excluded from PDSCH reception. 12 REs may be included in one RB of one OFDM symbol. Therefore, whether the 12 REs may be simultaneously used for PDSCH reception may be identified. That is, when at least one RE among the 12 REs is an overlapping RE, the UE may not use the 12 REs for PDSCH reception. This is because at least 12 REs included in one RB of one OFDM symbol may be required when the UE receives the DMRS. For example, a code division group (CDM) or an orthogonal cover code (OCC) may be applied to the DMRS of the PDSCH for multiplexing between multiple layers or other UEs, and the CDM or the OCC is applied to 12 REs included in one RB. When the UE receives only some of the 12 REs, the UE cannot perform multiplexing between multiple layers or other UEs.

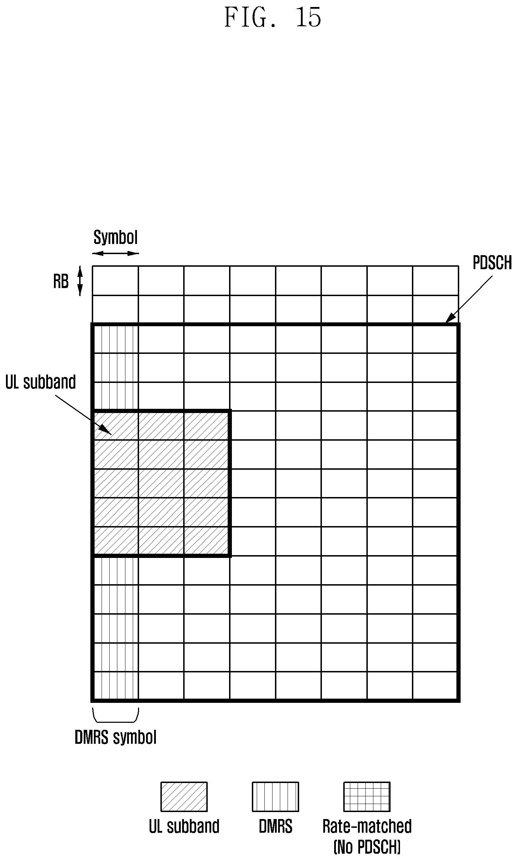

FIG. 15 is a diagram illustrating physical downlink shared channel (PDSCH) reception in the unit of a resource block (RB) according to a third method of embodiment 2 proposed in the disclosure.

Referring to FIG. 15, a DMRS symbol of a PDSCH overlaps a UL subband. A UE may receive a DMRS in the remaining RBs excluding overlapping RBs in the DMRS symbol, and may not receive a DMRS in the overlapping RBs.

In a fourth method, when an RE in which a DMRS of a PDSCH is transmitted is an overlapping RE, the UE may not use multiple RBs including the overlapping RE for PDSCH reception. Here, the multiple RBs may include at least one of the following.

- 1) A resource block group (RBG) in FDRA type-0. That is, RBs corresponding to each bit in FDRA type-0. The size of an RBG may be determined according to the number of RBs included in a BWP, and may be determined as one of values of 2, 4, 8, and 16.
- 2) A resource block bundle (RB bundle) used for VRB-to-PRB interleaving in FDRA type-1. The number of RBs included in an RB bundle may be 2 or 4.
- 3) An RBG used in FDRA type-1 of DCI format 1_2. That is, the unit of a bundle of RBs indicated by a resource indication value (RIV) in FDRA type-1. The size of an RBG may have at least one value among 2, 4, 8, and 16.

- 4) A physical resource group (PRG) assuming the same precoder may have values of 2 and 4.
- 5) The number of RBs to which a CDM or an OCC is applied in a DMRS may be one RB or two RBs. In the case of two RBs, the UE may apply a CDM or an OCC to the two RBs to enable multiplexing with a layer or another UE.

12 REs may be included in one RB of one OFDM symbol. In the third method described above, the UE is guaranteed to receive a DMRS in 12 REs in one RB. However, the UE may require more RBs for a greater number of successful DMRS receptions. For example, referring to 4) described above, the UE may receive a DMRS on the assumption of the same precoder for two or four consecutive RBs. In this case, when the UE fails to receive a DMRS in some of the two or four consecutive RBs that are configured, the channel estimation performance of the UE may be degraded. Therefore, the UE is required to receive a DMRS in at least the two or four consecutive RBs that are configured. That is, if at least one RE among REs included in the two or four consecutive RBs that are configured is an overlapping RE, the UE may identify that all the REs included in the two or four consecutive RBs are not used for PDSCH reception.

For example, referring to 5) described above, the UE may perform multi-layer reception or multiplexing between other UEs by applying a CDM or an OCC in a DMRS of the two consecutive RBs. Therefore, when the UE fails to receive a DMRS in some RBs among the two consecutive RBs, the UE cannot perform multi-layer reception or multiplexing between other UEs. Therefore, the UE is required to receive a DMRS in at least the two consecutive RBs. That is, if at least one RE among the REs included in the two consecutive RBs is an overlapping RE, the UE may identify that all the REs included in the two consecutive RBs are not used for PDSCH reception.

For reference, the UE may report, to a base station, whether the UE may perform multi-layer reception or multiplexing between other UEs by applying a CDM or an OCC in a DMRS of the two consecutive RBs. In addition, the UE may report, to the base station, whether the UE may perform multi-layer reception or multiplexing between other UEs by receiving only one RB among the two consecutive RBs. The report may correspond to an example of a UE capability report. When the UE reports, to the base station, whether the UE may perform multi-layer reception or multiplexing between other UEs by receiving only one RB among the two consecutive RBs, the base station may select one of the third and fourth methods of the disclosure. Further, the selection may be configured for the UE, and according to the configuration, the UE may identify an RB or RBs that cannot be received in the PDSCH according to one of the third and fourth methods.

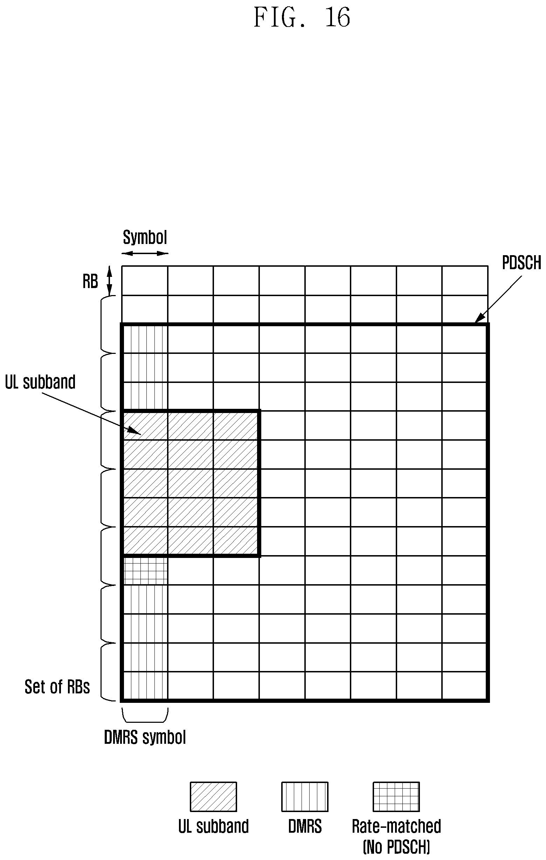

FIG. 16 is a diagram illustrating physical downlink shared channel (PDSCH) reception in the unit of multiple resource blocks (RBs) according to a fourth method of embodiment 2 proposed in the disclosure.

Referring to FIG. 16, a DMRS symbol of a PDSCH overlaps a UL subband. In FIG. 16, an RB set is generated by grouping two consecutive RBs. A UE may receive a DMRS in non-overlapping RB sets without receiving a DMRS in overlapping RB sets in the DMRS symbol. When even one RE of an RB set overlaps the UL subband, the RB set may be identified as an overlapping RB set.

Embodiment 3. Non-DMRS symbol rate matching according to whether a demodulation reference signal (DMRS) exists

As described above in embodiment 2, the UE determines a resource which is not received through a PDSCH when an RE in which a DMRS is transmitted in a DMRS symbol is an overlapping RE. In embodiment 3, a method for determining a resource which is not received through a PDSCH in a symbol (referred to as a non-DMRS symbol for convenience of description) which is not a DMRS symbol is discussed.

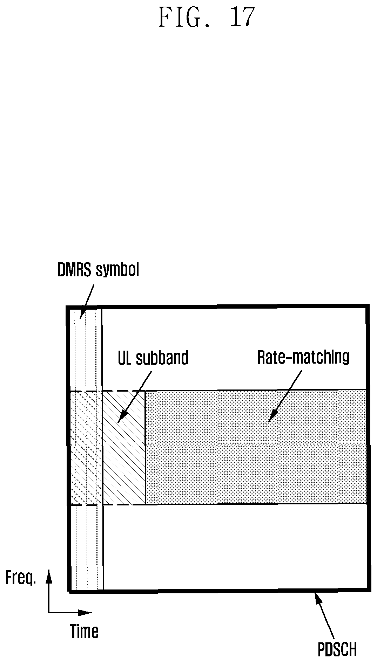

FIG. 17 is a diagram illustrating a situation in which a demodulation reference signal (DMRS) symbol of a physical downlink shared channel (PDSCH) overlaps a UL subband according to an embodiment of the disclosure.

Referring to FIG. 17, since an RE in which a DMRS is transmitted in a DMRS symbol of a PDSCH overlaps a UL subband, a UE cannot receive the DMRS in the RE. Meanwhile, it is necessary to determine a resource (rate-matching resource of FIG. 17) which is not used for PDSCH reception in a non-DMRS symbol.

[Method 1] Rate matching according to whether a first DMRS exists

In a first method, the UE may determine a subcarrier in which a DMRS does not exist in a first DMRS symbol of a PDSCH. For example, according to embodiment 2 described above, REs in which a DMRS is transmitted may be REs in which a DMRS is transmitted in the first DMRS symbol. In addition, according to embodiment 2, the UE may identify one or multiple RBs or an RE assumed not to be received among REs in which a DMRS of the PDSCH is transmitted. The UE may determine a subcarrier included in the RBs. The UE may identify that REs of a non-DMRS symbol corresponding to the determined subcarrier are REs in which the PDSCH is not transmitted. That is, the UE may exclude resources corresponding to the subcarrier in which the DMRS of the first DMRS symbol does not exist from PDSCH reception, even though the resources do not overlap a UL subband. Here, the first DMRS symbol indicates a DMRS symbol positioned first in time among DMRS symbols of the PDSCH.

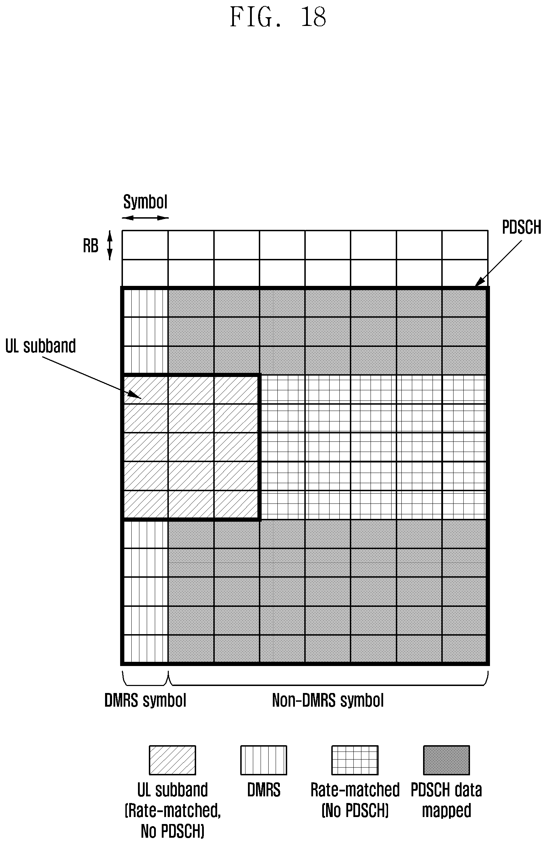

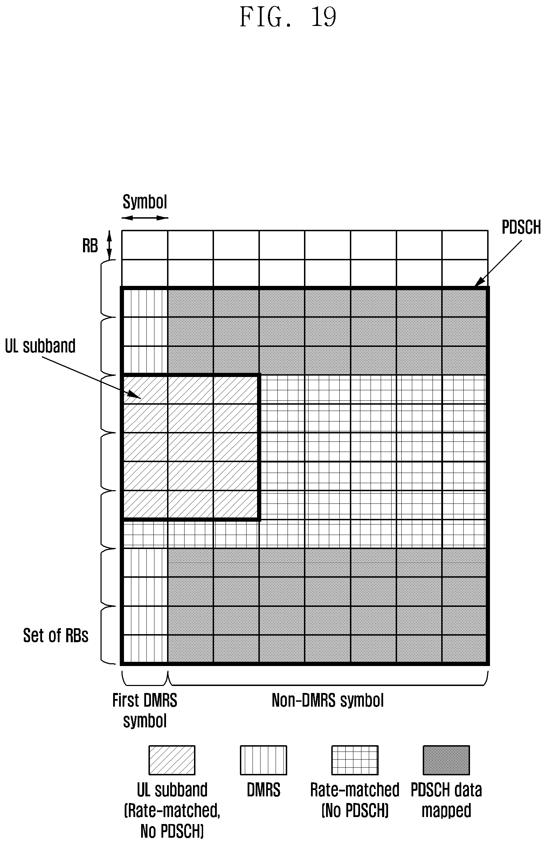

FIGS. 18 and 19 are diagrams illustrating a resource (rate-matched resource) which is not used for a physical downlink shared channel (PDSCH) according to method 1 of embodiment 3 proposed in the disclosure. FIG. 18 illustrates a case where an RB in which a DMRS is not transmitted in a DMRS symbol is determined according to method 3 of embodiment 2, and FIG. 19 illustrates a case where an RB set in which a DMRS is not transmitted in a DMRS symbol is determined according to method 3 of embodiment 2.

According to method 1, a UE may assume that a PDSCH is not received in REs corresponding to a subcarrier in which a DMRS is not transmitted in a first DMRS symbol. Conversely, the UE may assume that REs corresponding to a subcarrier in which a DMRS is transmitted in a first DMRS symbol are REs in which a PDSCH is received.

[Method 2] Rate matching according to whether at least one DMRS exists

In the method 1 described above, a rate matching resource is identified based on a DMRS of a first DMRS symbol. Meanwhile, an additional DMRS symbol may be configured for the UE according to a configuration. That is, when receiving a PDSCH, the UE may receive a DMRS in the first DMRS symbol and the additional DMRS symbol. In a second method, a subcarrier in which a DMRS is received in at least one DMRS symbol among a first DMRS symbol and additional DMRS symbols is included in PDSCH reception, and a subcarrier in which a DMRS is not received in all of the additional DMRS symbols and the first DMRS symbol may be excluded from the PDSCH reception. More specifically, the UE may determine a subcarrier in which a DMRS does not exist in a first DMRS symbol of a PDSCH. For example, according to embodiment 2 described above, REs in which a DMRS is transmitted may be REs in which a DMRS is transmitted in the first DMRS symbol. Further, according to embodiment 2, the UE may identify one or multiple RBs or an RE assumed not to be received among REs in which a DMRS of the PDSCH is transmitted. The UE may determine a first subcarrier included in the RBs. Further, the UE may determine a subcarrier in which a DMRS does not exist in an additional DMRS symbol of the PDSCH. For example, according to embodiment 2 described above, REs in which a DMRS is transmitted may be REs in which a DMRS is transmitted in the additional DMRS symbol. Further, according to embodiment 2, the UE may identify one or multiple RBs or an RE assumed not to be received among REs in which a DMRS of the PDSCH is transmitted. The UE may determine a second subcarrier included in the RBs. When a subcarrier in which the PDSCH is scheduled is included in both the first subcarrier and the second subcarrier (that is, in the subcarrier, a DMRS of the first DMRS symbol is excluded and a DMRS of the additional DMRS symbol is also excluded), the UE may identify that REs of a non-DMRS symbol corresponding to the subcarrier are REs in which the PDSCH is not transmitted. However, when the subcarrier in which the PDSCH is scheduled is not included in at least one of the first subcarrier and the second subcarrier (that is, in the subcarrier, a DMRS exists in at least one DMRS symbol among the first DMRS symbol and the additional DMRS symbol), the UE may identify that the REs of the non-DMRS symbol corresponding to the subcarrier are REs in which the PDSCH is transmitted.

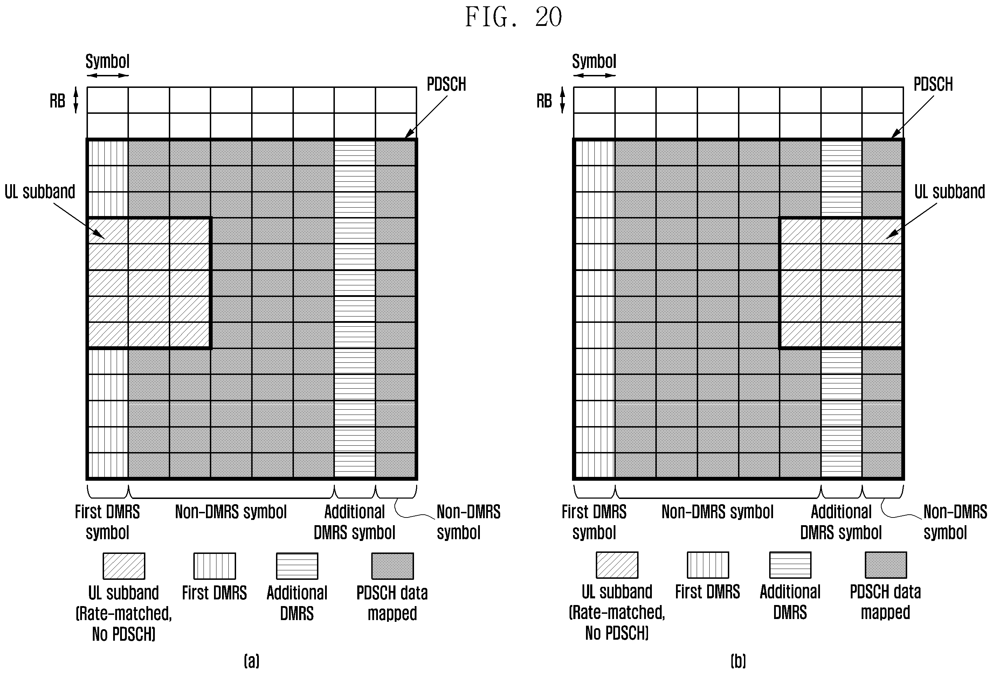

FIG. 20 is a diagram illustrating a resource (rate-matched resource) which is not used for a physical downlink shared channel (PDSCH) according to method 2 of embodiment 3 proposed in the disclosure.

FIG. 20 illustrates a case where an RB in which a DMRS is not transmitted in a DMRS symbol is determined according to method 3 of embodiment 2. The same scheme may also be applied to method 4 of embodiment 2.

According to method 2, a UE may assume that REs corresponding to a subcarrier in which a DMRS is received in at least one DMRS symbol among a first DMRS symbol and additional DMRS symbols are included in PDSCH reception. In case (a) of FIG. 20, since a DMRS of the first DMRS symbol is not received, but an additional DMRS is received, the UE may assume that REs corresponding to a subcarrier of the DMRS are included in the PDSCH reception. In case (b) of FIG. 20, since a DMRS of an additional DMRS symbol is not received, but a first DMRS is received, the UE may assume that REs corresponding to a subcarrier of the DMRS are included in the PDSCH reception.

[Method 3] Rate matching according to whether all DMRSs exist

In a third method, a subcarrier in which a DMRS is received in both a first DMRS symbol and an additional DMRS symbol is included in PDSCH reception, and a subcarrier in which a DMRS is not received in at least one symbols among the first DMRS symbol and the additional DMRS symbol may be excluded from the PDSCH reception. More specifically, the UE may determine a subcarrier in which a DMRS does not exist in a first DMRS symbol of a PDSCH. For example, according to embodiment 2 described above, REs in which a DMRS is transmitted may be REs in which a DMRS is transmitted in the first DMRS symbol. Further, according to embodiment 2, the UE may identify one or multiple RBs or an RE assumed not to be received among REs in which a DMRS of the PDSCH is transmitted. The UE may determine a first subcarrier included in the RBs. In addition, the UE may determine a subcarrier in which a DMRS does not exist in an additional DMRS symbol of the PDSCH. For example, according to embodiment 2 described above, REs in which a DMRS is transmitted may be REs in which a DMRS is transmitted in the additional DMRS symbol. Further, according to embodiment 2, the UE may identify one or multiple RBs or an RE assumed not to be received among REs in which a DMRS of the PDSCH is transmitted. The UE may determine a second subcarrier included in the RBs. When a subcarrier in which the PDSCH is scheduled is included in at least one of the first subcarrier and the second subcarrier (that is, in the subcarrier, a DMRS exists in at least one DMRS symbol among the first DMRS symbol and the additional DMRS symbol), the UE may identify that REs of a non-DMRS symbol corresponding to the subcarrier are REs in which the PDSCH is not transmitted. However, when the subcarrier in which the PDSCH is scheduled is included in neither the first subcarrier nor the second subcarrier (that is, in the subcarrier, a DMRS of the first DMRS symbol is excluded and a DMRS of the additional DMRS symbol is also excluded), the UE may identify that the REs of the non-DMRS symbol corresponding to the subcarrier are REs in which the PDSCH is transmitted.

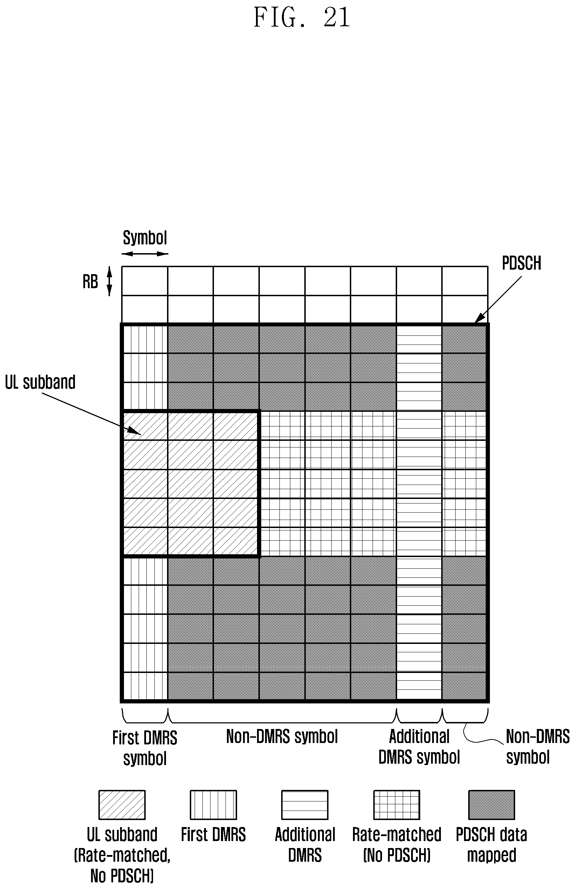

FIG. 21 is a diagram illustrating a resource (rate-matched resource) which is not used for a PDSCH according to method 3 of embodiment 3 proposed in the disclosure.

FIG. 21 illustrates a case where an RB in which a DMRS is not transmitted in a DMRS symbol is determined according to method 3 of embodiment 2. The same scheme may also be applied to method 4 of embodiment 2.

According to method 3, a UE may assume that REs corresponding to a subcarrier in which a DMRS is received in at least one DMRS symbol among a first DMRS symbol and additional DMRS symbols are not included in PDSCH reception. In FIG. 21, since a DMRS of the first DMRS symbol is not received, the UE may assume that REs corresponding to a subcarrier of the DMRS are not included in the PDSCH reception.

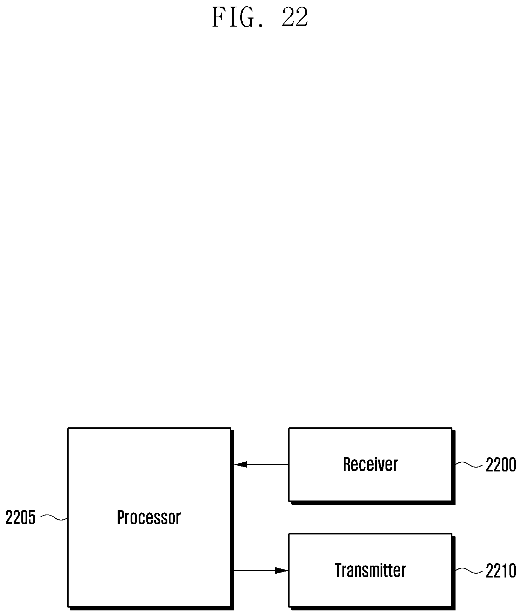

FIG. 22 illustrates a structure of a UE in a wireless communication system according to an embodiment of the disclosure.

Referring to FIG. 22, the UE may include a transceiver, which refers to a receiver 2200 and a transmitter 2210 as a whole, a memory (not illustrated), and a processor 2205 (or controller). The transceiver 2200 and 2210, the memory, and the processor 2205 of the UE may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include a storage medium such as a ROM, a RAM, a hard disk, a CD-ROM, or a DVD, or a combination of storage media. In addition, the memory may include multiple memories.

Furthermore, the processor may control a series of processes such that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

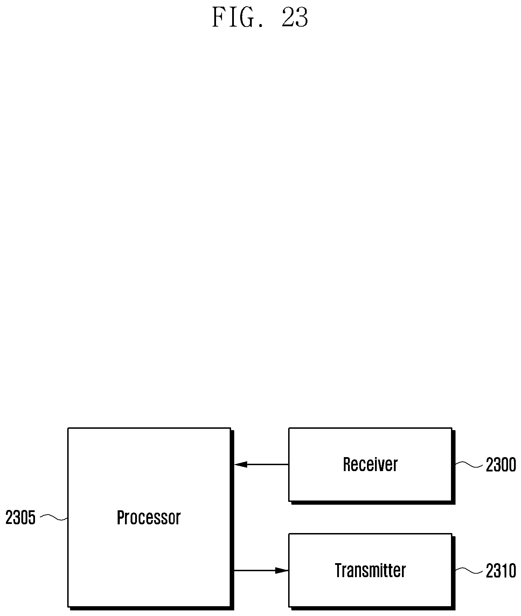

FIG. 23 illustrates a structure of a base station in a wireless communication system according to an embodiment of the disclosure.

Referring to FIG. 23, the base station may include a transceiver, which refers to a receiver 2300 and a transmitter 2310 as a whole, a memory (not illustrated), and a processor 2305 (or controller). The transceiver 2300 and 2310, the memory, and the processor 2305 of the base station may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a wireless communication system supporting subband non-overlapping full duplex (SBFD), the method comprising:

obtaining at least one piece of uplink subband (UL subband) configuration information comprising time and frequency resource configuration information for configuring a part of a resource for downlink reception as a resource for uplink transmission, and first information indicating an uplink subband to be activated among at least one uplink subband;
receiving control information on downlink data reception in the activated uplink subband; and
determining whether to receive downlink data in the activated uplink subband, based on one of the at least one piece of uplink subband configuration information, the first information, or the control information.

2. The method of claim 1, wherein the determining of whether to receive the downlink data in the activated uplink subband comprises:

   determining whether the control information comprises a field indicating whether downlink data can be received in the activated uplink subband;
   in case that the control information comprises the field, determining whether to receive the downlink data in the activated uplink subband, based on a value of the field; and
   in case that the control information does not comprise the field, receiving the downlink data in the activated uplink subband.

3. The method of claim 1, wherein the determining of whether to receive the downlink data in the activated uplink subband comprises:

   in case that the at least one piece of uplink subband configuration information is obtained through radio resource control (RRC), determining to receive the downlink data in the activated uplink subband; and
   in case that the at least one piece of uplink subband configuration information is obtained through a system information block (SIB), determining not to receive the downlink data in the activated uplink subband.

4. The method of claim 1, wherein the obtaining comprises obtaining second information on whether downlink data can be received in the at least one uplink subband.

5. The method of claim 4, wherein the second information indicates that downlink data can be received in all of the at least one uplink subband, indicates whether downlink data can be received in each of the at least one uplink subband, or indicates that downlink data can be received in a specific symbol or resource block (RB) of each of the at least one uplink subband.

6. A method performed by a base station in a wireless communication system supporting subband non-overlapping full duplex (SBFD), the method comprising:

   transmitting, to a terminal, at least one piece of uplink subband (UL subband) configuration information comprising time and frequency resource configuration information for configuring a part of a resource for downlink reception as a resource for uplink transmission, and first information indicating an uplink subband to be activated among at least one uplink subband;
   transmitting, to the terminal, control information on downlink data reception in the activated uplink subband; and
   transmitting downlink data in the activated uplink subband, based on one of the at least one piece of uplink subband configuration information, the first information, or the control information.

7. The method of claim 6, wherein the control information further comprises a field indicating whether downlink data can be received in the activated uplink subband.

8. The method of claim 6, wherein the transmitting further comprises transmitting second information on downlink data reception in the at least one uplink subband,

   wherein the second information indicates to receive downlink data in all of the at least one uplink subband, indicates to receive downlink data in each of the at least one uplink subband, or indicates to receive downlink data in a specific symbol or resource block (RB) of each of the at least one uplink subband,
   wherein, in case that the at least one piece of uplink subband configuration information is transmitted through radio resource control (RRC), the downlink data is determined to be received in the activated uplink subband, and
   wherein, in case that the at least one piece of uplink subband configuration information is transmitted through a system information block (SIB), the downlink data is determined not to be received in the activated uplink subband.

9. A terminal in a wireless communication system supporting subband non-overlapping full duplex (SBFD), the terminal comprising:

a transceiver configured to transmit or receive a signal; and
a controller,
wherein the controller is configured to:

obtain at least one piece of uplink subband (UL subband) configuration information comprising time and frequency resource configuration information for configuring a part of a resource for downlink reception as a resource for uplink transmission, and first information indicating an uplink subband to be activated among at least one uplink subband;
receive control information on downlink data reception in the activated uplink subband; and
determine whether to receive downlink data in the activated uplink subband, based on one of the at least one piece of uplink subband configuration information, the first information, or the control information.

10. The terminal of claim 9, wherein the controller is configured to:

determine whether the control information comprises a field indicating whether downlink data can be received in the activated uplink subband;
in case that the control information comprises the field, determine whether to receive the downlink data in the activated uplink subband, based on a value of the field; and
in case that the control information does not comprise the field, receive the downlink data in the activated uplink subband.

11. The terminal of claim 9, wherein the controller is configured to:

in case that the at least one piece of uplink subband configuration information is obtained through radio resource control (RRC), determine to receive the downlink data in the activated uplink subband; and
in case that the at least one piece of uplink subband configuration information is obtained through a system information block (SIB), determine not to receive the downlink data in the activated uplink subband.

12. The terminal of claim 9, wherein the controller is configured to obtain second information on whether downlink data can be received in the at least one uplink subband, and
wherein the second information indicates that downlink data can be received in all of the at least one uplink subband, indicates whether downlink data can be received in each of the at least one uplink subband, or indicates that downlink data can be received in a specific symbol or resource block (RB) of each of the at least one uplink subband.

13. A base station in a wireless communication system supporting subband non-overlapping full duplex (SBFD), the base station comprising:

a transceiver configured to transmit or receive a signal; and
a controller,
wherein the controller is configured to:

transmit, to a terminal, at least one piece of uplink subband (UL subband) configuration information comprising time and frequency resource configuration information for configuring a part of a resource for downlink reception as a resource for uplink transmission, and first information indicating an uplink subband to be activated among at least one uplink subband;
transmit, to the terminal, control information on downlink data reception in the activated uplink subband; and
transmit downlink data in the activated uplink subband, based on one of the at least one piece of uplink subband configuration information, the first information, or the control information.

14. The base station of claim 13, wherein the control information further comprises a field indicating whether downlink data can be received in the activated uplink subband.

15. The base station of claim 13, wherein the controller is configured to transmit second information on downlink data reception in the at least one uplink subband,

wherein the second information indicates to receive downlink data in all of the at least one uplink subband, indicates to receive downlink data in each of the at least one uplink subband, or indicates to receive downlink data in a specific symbol or resource block (RB) of each of the at least one uplink subband,

wherein, in case that the at least one piece of uplink subband configuration information is transmitted through radio resource control (RRC), the downlink data is determined to be received in the activated uplink subband, and

wherein, in case that the at least one piece of uplink subband configuration information is transmitted through a system information block (SIB), the downlink data is determined not to be received in the activated uplink subband.

# FIG. 1

One subframe (110)

$N_{symb}^{subframe,\mu}$ OFDM symbols

1 OFDM symbols (102)

1 subcarrier (103)

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

$K = 0$

$\bar{l} = 0$

$\bar{l} = 14 \cdot 2^{\mu} - 1$

Time

# FIG. 2

FIG. 3

BWP#1
(301)

BWP#2
(302)

Frequency

UE bandwidth
(300)

FIG. 4

Duration [404]

Frequency resources [403]

UE bandwidth part [410]

Slot [420]

Control resource set#1 [401]

Control resource set#2 [402]

Time

Frequency

FIG. 5

FIG. 6

# FIG. 7

RA type 0
[7-00]

7-15

Bitmap

RA type 1
[7-05]

7-20

Starting VRB

7-25

Length

Both RA
type 0 & 1
[7-10]

7-30

1 bit for RA type
indication

7-35

Max {payload for RA type 0, payload for RA type 1}

EP 4 604 436 A1

# FIG. 8

S
(8-00)

L (8-05)

| 0 | 1 | 2 | 3 | 4 | 5 | 6 | 7 | 8 | 9 | 10 | 11 | 12 | 13 |

OFDM symbol

$$\text{Slot}\left[ n \cdot \frac{2^{\mu_{PDSCH}}}{2^{\mu_{PDCCH}}} \right] + K_0 \quad (8\text{-}10)$$

## FIG. 9

# FIG. 10

Single cell LTE/NR (S00)

**gNB**
- SDAP (S25)
- PDCP (S30)
- RLC (S35)
- MAC (S40)
- PHY (S45)

**UE**
- PHY (S50)
- MAC (S55)
- RLC (S60)
- PDCP (S65)
- SDAP (S70)

Carrier aggregation (S10)

**gNB**
- SDAP
- PDCP
- RLC
- MAC
- PHY ... PHY

**UE**
- PHY ... PHY
- MAC
- RLC
- PDCP
- SDAP

Dual connectivity (S20)

**MgNB**
- SDAP
- PDCP
- RLC
- MAC
- PHY

**SgNB**
- RLC
- MAC
- PHY

**UE**
- PHY
- MAC
- RLC
- PDCP
- SDAP

**(SgNB UE)**
- PHY
- MAC
- RLC

EP 4 604 436 A1

# FIG. 11

TDD periodicity

| D | D | D | S | U | D | D | D | S | U | D | D | D | S | U | D | D | D | S | U |

1101     (a) TDD only configuration

TDD periodicity

UL subband (1110)

| D | D | D | S | U | D | D | D | S | U | D | D | D | S | U | D | D | D | S | U |

1112  1111     (b) SBFD configuration 1

TDD periodicity

UL subband (1120)

| D | D | D | S | U | D | D | D | S | U | D | D | D | S | U | D | D | D | S | U |

1122  1121     (c) SBFD configuration 2

TDD periodicity

| D | D | D | S | U | D | D | D | S | U | D | D | D | S | U | D | D | D | S | U |

1132 1133 1134 1131     (d) SBFD configuration 3

EP 4 604 436 A1

# FIG. 12

slot

UL subband
(1210)

Freq.

Time

(a) UL subband in DL/F symbols

slot

UL subband
(1210)

Freq.

Time

DMRS
symbol
(1270)

PDSCH
(1250)

(b) PDSCH scheduling
overlapping with UL subband

## FIG. 13

(a) DL subband in UL/F symbols

(b) PUSCH scheduling
overlapping with DL subband

FIG. 14

# FIG. 15

# FIG. 16

Symbol

PDSCH

RB

UL subband

Set of RBs

DMRS symbol

UL subband    DMRS    Rate-matched
(No PDSCH)

FIG. 17

# FIG. 18

# FIG. 19

FIG. 20

(a)

(b)

# FIG. 21

FIG. 22

2205 Processor

Receiver 2200

Transmitter 2210

FIG. 23

Processor 2305

Receiver 2300

Transmitter 2310

## INTERNATIONAL SEARCH REPORT

| International application No. |
| --- |
| **PCT/KR2023/017634** |

| | |
| --- | --- |
| **A.** | **CLASSIFICATION OF SUBJECT MATTER** |
| | **H04L 5/00**(2006.01)i; **H04L 5/14**(2006.01)i; **H04W 72/23**(2023.01)i |

According to International Patent Classification (IPC) or to both national classification and IPC

| | |
| --- | --- |
| **B.** | **FIELDS SEARCHED** |

Minimum documentation searched (classification system followed by classification symbols)

H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SBFD, 상향링크 부대역(UL subband), 하향 링크(downlink), 데이터(data), RRC, SIB

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | NOKIA et al. On subband non-overlapping full duplex for NR. R1-2210042, 3GPP TSG RAN WG1 #110bis-e. 30 September 2022.<br>See pages 2 and 11-13. | 1-15 |
| Y | MODERATOR (CATT). Summary #5 of subband non-overlapping full duplex. R1-2208122, 3GPP TSG RAN WG1 #110. Toulouse, France. 28 August 2022.<br>See pages 17-18, 68 and 88. | 1-15 |
| Y | SAMSUNG. SBFD feasibility and design considerations for NR duplex evolution. R1-2209729, 3GPP TSG-RAN WG1 Meeting #110bis-e. 30 September 2022.<br>See pages 18 and 22. | 4-5,8,12,15 |
| A | QUALCOMM INCORPORATED. Feasibility and techniques for Subband non-overlapping full duplex. R1-2212115, 3GPP TSG RAN WG1, Meeting #111. Toulouse, France. 05 November 2022.<br>See pages 1-42. | 1-15 |
| A | CMCC. Discussion on subband non-overlapping full duplex. R1-2204304, 3GPP TSG RAN WG1 #109-e. 29 April 2022.<br>See pages 1-10. | 1-15 |

☐ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 February 2024** | **14 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)